(19) Europäisches Patentamt
European Patent Office
Office européen des brevets

(11) **EP 4 664 384 A1**

(12) **EUROPEAN PATENT APPLICATION**

(43) Date of publication:
**17.12.2025** Bulletin 2025/51

(21) Application number: **25181636.9**

(22) Date of filing: **10.06.2025**

(51) International Patent Classification (IPC):
**G06Q 40/04** (2012.01)   **G06Q 50/06** (2024.01)

(52) Cooperative Patent Classification (CPC):
**G06Q 50/06; G06Q 40/04**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **14.06.2024 IN 202421046161**

(71) Applicant: **Tata Consultancy Services Limited Maharashtra (IN)**

(72) Inventors:
• **GUPTA, SHRAYASH**
  **411057 Pune (IN)**
• **MENON, VISHNU PADMAKUMAR**
  **411057 Pune (IN)**
• **VELAYUDHAN KUMAR, MOHAN RAJ**
  **600113 Chennai (IN)**
• **BICHPURIYA, YOGESH KUMAR**
  **411057 Pune (IN)**
• **SARANGAN, VENKATESH**
  **600113 Chennai (IN)**

(74) Representative: **Goddar, Heinz J.**
**Boehmert & Boehmert**
**Anwaltspartnerschaft mbB**
**Pettenkoferstrasse 22**
**80336 München (DE)**

(54) **SYSTEMS AND METHODS FOR SIMULTANEOUS ENERGY SCHEDULING AND TRADING PORTFOLIO OPTIMIZATION FOR AN ENERGY HUB**

(57)     The present discourse provides a system and method for simultaneous energy scheduling and trading portfolio optimization for an energy hub (EH). In the present disclosure, an optimal strategy is generated for (i) energy scheduling and (ii) portfolio based trading in a simultaneous manner using a dynamic optimization model for the EH with multiple energy types, taking into account an uncertainty factor on each of a supply side and a demand side. The dynamic optimization model provides the EH with an optimal schedule for a plurality of energy assets, and provides an EH operator with an optimal trading portfolio for the multiple energy types in the EH. The optimal schedule for the plurality of energy assets and trading portfolio of the EH operator are calculated while maximizing the realized profit. Furthermore, the dynamic optimization model ensures the sustainability while minimizing the $CO_2$ emissions and increased overall efficiency of the EH.

FIG. 2

**Description**

CROSS-REFERENCE TO RELATED APPLICATIONS AND PRIORITY

The present application claims priority to Indian application no. 202421046161 filed on June 14, 2024.

TECHNICAL FIELD

The disclosure herein generally relates to the field of energy scheduling and trading portfolio optimization, and, more particularly, to systems and methods for simultaneous energy scheduling and trading portfolio optimization for an energy hub.

BACKGROUND

Over past decade, impact of climate change and global warming has increased and is visible in terms of natural disasters, warming of ocean waters, and/or the like. Thus, there is a requirement to transition traditional energy systems based on centralized energy distribution, such as thermal power plants, into decentralized distribution, such as solar photovoltaic (PV) and wind farms. A decentralized system, also known as a distributed energy systems (DES) is based on many small-scale distributed energy generators. Many studies of DES show its superiority over existing systems in terms of transmission power loss, line reliability and cyberattacks. Many concepts have been developed to implement DES such as micro-grids and smart grids. These concepts are complemented by other strategies to optimally manage the uncertainties associated with energy generation and load such as the use of battery energy storage systems (BESS) for effective utilization and reliable operation of renewable energy sources (RES), demand response management for optimal load management to ensure frequency balancing of the systems.

In recent years, cogeneration technologies such as combined heat and power (CHP) and combined cooling, heating and power have gained prominence in the DES sector due to the growing demand for different types of energies such as heating, cooling, hydrogen, etc. The demand for diverse types of energy has led to the emergence of other energy systems, such as thermal energy systems and gas energy systems. Initially, the different energy systems were designed and operated separately. Recently, co-optimization of different energy systems has received a lot of attention, because co-optimization decisions have a synergistic effect in terms of energy efficiency, flexibility and sustainability. This innovative approach of co-optimizing different energy systems has led to the development of a new energy architecture called multi-energy systems (MES).

Various approaches have been developed and researched to implement MES, such as virtual power plants (VPPs) that act as an aggregator of different types of energy and focus on market integration of many distributed generation resources like solar PV, wind farms, multi-energy microgrids (MMG) where many distributed energy generators and different types of energy loads in the grid interact with each other ensuring a balance between supply and demand for each type of energy and integrated energy systems (IES) focus on integrating thermally activated technologies with distributed generation equipment. An energy hub (EH) is a system that connects multiple types of energy between demand-side and generation side infrastructure through energy storage and converters. EH as a conceptual model has evolved into a superset for MES as it can model VPP, MMG and IES. The EH is scalable in terms of number of interconnected components, size, or capacity of each of these components and can effectively serve consumers or demands efficiency by taking advantage of existing energy infrastructure. This opens a wide scope of modeling problems such as optimal planning and sizing of EH, optimal scheduling of EH to reduce operation costs, EH uncertainty modeling, and /or the like.

In the optimal scheduling problem of the EH, objective is to determine amount of energy that must be generated by energy generators in different time blocks to meet load demand by minimizing operating costs. In an existing work, the optimal scheduling problem of the EH is addressed by developing a genetic algorithm to meet dual goals of minimizing operating costs and EH emissions. However, in the existing work the optimal schedule is determined by assuming that the demand and generation profile of the RES are deterministic. But demand and RES generation are uncertain and risk arising from these uncertainties must be modeled to ensure the robustness of EH. Many studies have been conducted to model demand uncertainty or RES generation uncertainty or both to make EH robust by considering multiple scenarios through Monte Carlo simulations. However, they are limited in the sense that if the generation profile or the load profile is highly uncertain, they cannot reduce its impact. This is where Mean Variance Portfolio Optimization (MV-PO) offers a different approach to maximizing expected returns at an acceptable level of risk. It reduces exposure to a certain type of load or generation technology if it is very uncertain. The quotient of risk is measured by the covariance matrix of the portfolio options. The MV-PO theory has been widely used by generation companies to find the optimal portfolio allocation across different electricity markets. In an existing work, an MV-PO approach for electricity consumers is provided in which the portfolio allocation is finalized either through risk-free contractual agreement and/or from volatile markets with a certain level of risk. However, it is restricted to economic aspect of EH modelling with a sole objective to maximize the profit of the EH and minimize its risk.

## SUMMARY

Embodiments of the present disclosure present technological improvements as solutions to one or more of the above-mentioned technical problems recognized by the inventors in conventional systems. For example, in one embodiment, a processor implemented method is provided. The processor implemented method, comprising: receiving, via one or more hardware processors, (i) a supply end input data from a plurality of energy assets in an energy hub that are handling multiple types of energy for energy scheduling considering a plurality of supply constraints, and (ii) a demand end input data from a plurality of trading units considering a plurality of trading constraints; inputting, via the one or more hardware processors, the supply end input data and the trading end input data to a dynamic optimization model that captures one or more interactions between (i) the plurality of energy assets in the energy hub, (ii) multiple types of energy in the energy hub, and (iii) the energy hub and its ecosystem, wherein the dynamic optimization model is required to satisfy an objective function characterized as:

$$
\begin{aligned}
\max_{X(t)} \sum_{\forall t \in \{1..T\}} & \Big[ \big( (pr(t)^T) \times xr(t) \big) \\
& + \big( 1^{[1 \times N]} \times \big( PNR(t) \odot XNR(t) \big) \times 1^{[N \times 1]} \big) - 1^{[1 \times N]} \times gc(t) \\
& - \big( 1^{[1 \times N]} \times \big( CC(t) \odot Y(t) \big) \times 1^{[N \times 1]} \big) \\
& - k_1 \times xr(t) \times Q_1(t) \times xr(t)^T - emi(t) \times \lambda \Big]
\end{aligned}
$$

where, a first term of the objective function represents a realized revenue generated from one or more risk options, a second term of the objective function represents a realized revenue generated from one or more non-risk options, a third term of the objective function represents a total generation cost, a fourth term of the objective function represents a total conversion cost, a fifth term of the objective function represents a risk factor, and a sixth term of the objective function represents a penalty on emissions, and wherein $pr(t)$ represents a risk component of a price matrix depicting price associated with one or more trading options at time block $t$, $xr(t)$ represents a risk component of a portfolio split matrix at time block $t$, $PNR(t)$ represents a non-risk component of the price matrix depicting price associated with the one or more trading options at time block $t$, $XNR(t)$ represents a non-risk component of a portfolio split matrix at time block $t$, $gc(t)$ represents total cost to generate one or more energy types by the EH for time block $t$, $CC(t)$ represents an energy conversion cost matrix at time block $t$, $Y(t)$ represents a resultant converted energy volume matrix at time block $t$, $k_1$ represents a risk aversion coefficient, $Q_1(t)$ represents a day-ahead market (DAM) price covariance matrix at time block $t$, $emi(t)$ represents total $CO_2$ emissions produced by the EH at time block $t$, and $\lambda$ represents an emission penalization cost; generating, via the one or more hardware processors, an optimal strategy for (i) energy scheduling and (ii) portfolio based trading in a simultaneous manner using the dynamic optimization model; and dynamically updating, via the one or more hardware processors, the optimal strategy for (i) energy scheduling and (ii) portfolio based trading using the dynamic optimization model in accordance with a real time change in the plurality of supply constraints, and the plurality of trading constraints, such that a maximum profit is obtained while minimizing operating cost and emission.

In another aspect, a system is provided. The system comprising a memory storing instructions; one or more Input/Output (I/O) interfaces; and one or more hardware processors coupled to the memory via the one or more I/O interfaces, wherein the one or more hardware processors (104) are configured by the instructions to: receive (i) a supply end input data from a plurality of energy assets in an energy hub that are handling multiple types of energy for energy scheduling considering a plurality of supply constraints, and (ii) a demand end input data from a plurality of trading units considering a plurality of trading constraints; input the supply end input data and the trading end input data to a dynamic optimization model that captures one or more interactions between (i) the plurality of energy assets in the energy hub, (ii) multiple types of energy in the energy hub, and (iii) the energy hub and its ecosystem, wherein the dynamic optimization model is required to satisfy an objective function characterized as:

3

$$\max_{X(t)} \sum_{\forall t \in \{1..T\}} \Big[ \big( (pr(t)^T) \times xr(t) \big)$$

$$+ \Big( 1^{[1 \times N]} \times \big( PNR(t) \odot XNR(t) \big) \times 1^{[N \times 1]} \Big) - 1^{[1 \times N]} \times gc(t)$$

$$- \Big( 1^{[1 \times N]} \times \big( CC(t) \odot Y(t) \big) \times 1^{[N \times 1]} \Big)$$

$$- k_1 \times xr(t) \times Q_1(t) \times xr(t)^T - emi(t) \times \lambda \Big]$$

where, first term of the objective function represents realized revenue generated from one or more risk options, second term of the objective function represents realized revenue generated from one or more non-risk options, third term of the objective function represents total generation cost, fourth term of the objective function represents total conversion cost, fifth term of the objective function represents a risk factor, and sixth term of the objective function represents a penalty on emissions, and wherein $pr(t)$ represents a risk component of a price matrix depicting price associated with one or more trading options at time block $t$, $xr(t)$ represents a risk component of a portfolio split matrix at time block $t$, $PNR(t)$ represents a non-risk component of the price matrix depicting price associated with the one or more trading options at time block $t$, $XNR(t)$ represents a non-risk component of a portfolio split matrix at time block $t$, $gc(t)$ represents total cost to generate one or more energy types by the EH for time block $t$, $CC(t)$ represents an energy conversion cost matrix at time block $t$, $Y(t)$ represents a resultant converted energy volume matrix at time block $t$, $k_1$ represents a risk aversion coefficient, $Q_1(t)$ represents a day-ahead market (DAM) price covariance matrix at time block $t$, $emi(t)$ represents total $CO_2$ emissions produced by the EH at time block $t$, and $\lambda$ represents an emission penalization cost; generate an optimal strategy for (i) energy scheduling and (ii) portfolio based trading in a simultaneous manner using the dynamic optimization model; and dynamically update the optimal strategy for (i) energy scheduling and (ii) portfolio based trading using the dynamic optimization model in accordance with a real time change in the plurality of supply constraints, and the plurality of trading constraints, such that a maximum profit is obtained while minimizing operating cost and emission.

In yet another aspect, a non-transitory computer readable medium is provided. The non-transitory computer readable medium are configured by instructions for providing receiving (i) a supply end input data from a plurality of energy assets in an energy hub that are handling multiple types of energy for energy scheduling considering a plurality of supply constraints, and (ii) a demand end input data from a plurality of trading units considering a plurality of trading constraints; inputting the supply end input data and the trading end input data to a dynamic optimization model that captures one or more interactions between (i) the plurality of energy assets in the energy hub, (ii) multiple types of energy in the energy hub, and (iii) the energy hub and its ecosystem, wherein the dynamic optimization model is required to satisfy an objective function characterized as:

$$\max_{X(t)} \sum_{\forall t \in \{1..T\}} \Big[ \big( (pr(t)^T) \times xr(t) \big)$$

$$+ \Big( 1^{[1 \times N]} \times \big( PNR(t) \odot XNR(t) \big) \times 1^{[N \times 1]} \Big) - 1^{[1 \times N]} \times gc(t)$$

$$- \Big( 1^{[1 \times N]} \times \big( CC(t) \odot Y(t) \big) \times 1^{[N \times 1]} \Big)$$

$$- k_1 \times xr(t) \times Q_1(t) \times xr(t)^T - emi(t) \times \lambda \Big]$$

where, a first term of the objective function represents a realized revenue generated from one or more risk options, a second term of the objective function represents a realized revenue generated from one or more non-risk options, a third term of the objective function represents a total generation cost, a fourth term of the objective function represents a total conversion cost, a fifth term of the objective function represents a risk factor, and a sixth term of the objective function represents a penalty on emissions, and wherein $pr(t)$ represents a risk component of a price matrix depicting price associated with one or more trading options at time block $t$, $xr(t)$ represents a risk component of a portfolio split matrix at time block $t$, $PNR(t)$ represents a non-risk component of the price matrix depicting price associated with the one or more trading options at time block $t$, $XNR(t)$ represents a non-risk component of a portfolio split matrix at time block $t$, $gc(t)$ represents total cost to generate one or more energy types by the EH for time block $t$, $CC(t)$ represents an energy conversion cost matrix at time block $t$, $Y(t)$ represents a resultant converted energy volume matrix at time block $t$, $k_1$ represents a risk aversion coefficient, $Q_1(t)$ represents a day-ahead market (DAM) price covariance matrix at time block $t$,

*emi*($t$) represents total $CO_2$ emissions produced by the EH at time block $t$, and $\lambda$ represents an emission penalization cost; generating an optimal strategy for (i) energy scheduling and (ii) portfolio based trading in a simultaneous manner using the dynamic optimization model; and dynamically updating the optimal strategy for (i) energy scheduling and (ii) portfolio based trading using the dynamic optimization model in accordance with a real time change in the plurality of supply constraints, and the plurality of trading constraints, such that a maximum profit is obtained while minimizing operating cost and emission.

In accordance with an embodiment of the present disclosure, the plurality of energy assets units in the energy hub comprises a first set of energy generators, a second set of energy generators, a set of energy storages, and a set of energy converters, and wherein the plurality of trading units comprises a demand unit and an emission unit.

In accordance with an embodiment of the present disclosure, the first set of energy generators are a set of non-renewable energy generators and the second set of energy generators are a set of renewable energy sources (RES) generators, and wherein an uncertainty factor is associated with the RES generators.

In accordance with an embodiment of the present disclosure, the plurality of supply constraints comprise at least one of (i) one or more generator asset constraints, (ii) one or more robust optimization (RO) constraints, (iii) one or more conversion constraints, and (iv) one or more storage constraints.

In accordance with an embodiment of the present disclosure, the trading constraints comprise at least one of (i) one or more cost related constraints, (ii) one or more demand side risk constraints, and (iii) one or more regulatory requirements based constraints.

In accordance with an embodiment of the present disclosure, the dynamic optimization model is scalable in terms of multiple energy types, multiple assets types, and multiple demand types.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary block diagram of a system for simultaneous energy scheduling and trading portfolio optimization for an energy hub, in accordance with some embodiments of the present disclosure.

FIG. 2 illustrates a broad level functional block diagram for a processor implemented method for simultaneous energy scheduling and trading portfolio optimization for an energy hub, in accordance with some embodiments of the present disclosure.

FIG. 3 illustrates an exemplary flow diagram illustrating a method for simultaneous energy scheduling and trading portfolio optimization for an energy hub, using the system of FIG. 1, in accordance with some embodiments of the present disclosure.

FIG. 4 depicts a block diagram illustrating representation of an independent example energy hub (EH), in accordance with some embodiments of the present disclosure.

FIGS. 5A and 5B depict graphical representations illustrating hourly average of energy volumes for different energy types, in accordance with some embodiments of the present disclosure.

FIGS. 6A and 6B depict graphical representations illustrating bilateral agreement price for different energy types, in accordance with some embodiments of the present disclosure.

FIGS. 7A and 7B depict graphical representations illustrating actual and predicted DAM prices for different types of energy in accordance with some embodiments of the present disclosure.

FIG. 8 depicts a normalized radar plot representation illustrating relationship between different uncertainty scenarios on value indicators, in accordance with some embodiments of the present disclosure.

FIGS. 9A and 9B depict graphical representation illustrating generation profiles of the different energy generators in the EH for each energy type, in accordance with some embodiments of the present disclosure.

FIG. 10 depicts graphical representation illustrating conversion profiles in terms of generator utilization, in accordance with some embodiments of the present disclosure.

FIG. 11 depicts a graphical representation illustrating storage profiles, in accordance with some embodiments of the present disclosure.

FIG. 12 depicts a graphical representation illustrating trading profiles, in accordance with some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments. It is intended that the following detailed description be considered as exemplary only, with the true scope being indicated by the following embodiments described herein.

Higher adoption and integration of Renewable Energy sources (RES) to the energy infrastructures is pushing towards rapid development of multi-energy systems (MES). In such systems, there is a symbiotic relationship among different energy types and components. However, the realization of MES requires an appropriate mechanism for integrated management of system components. An energy Hub (EH) streamlines generation, conversion, storage, and consumption of multi-energy types and provides an encouraging choice for integrated management of MES. A major challenge in the implementation of EH is to determine optimal energy quanta flows in generation, conversion, storage, and consumption for different energy types considering strong inter-energy couplings and conflicting energy price variability/risk. Specifically, one of the main goals is to enable the EH operator to improve its profit margins by deciding on optimal schedules for energy generators, energy storage's and energy converters as well as choosing and engage in opportunistic venue including energy markets, energy demand streams, storage's to offset supply surplus and shortage, future price volatility/risk. mitigation, etc. This is a portfolio optimization problem and can be characterized through a mean-variance or stochastic probabilistic approach to express the risk or uncertainties induced by EH system constituents.

Solving this scheduling cum trading portfolio optimization problem for an EH that connects multi-energy day-ahead market (DAM), multi-energy bilateral demands, multi-energy storage options, and supply-demand side variability is a unique challenge. In EH, the energy storage of different energy types is modeled independently without taking into account the interactions between them. To solve this problem, a general integrated storage strategy that takes into account the state-of-charge interaction between different types of energy storage is considered in the method of the present disclosure. Furthermore, many variations of the MV-PO technique have been implemented mainly to determine the optimal trading strategy for one type of energy (electricity), but there is still a gap in terms of formulating and solving a trading problem in a multi-energy setup considering energy conversion efficiencies, energy conversion costs and multi-energy market price variability.

Conventionally, both scheduling and trading problems are solved independently using a two-step process. First, the scheduling is done to determine how much energy needs to be generated, how much energy needs to be stored, and how much energy needs to be converted from one form to another. In the second step, trading is carried out to determine how much volume of a particular type of energy needs to be traded in which DAM, bilateral agreements (BLA), and other demand types. This two-step process leads to suboptimal solutions. In a recent work (e.g., refer 'IN 202321084876 titled Method And System For Computing Optimal Energy Generation Schedule In Multi-Energy Hubs'), optimal energy schedule is computed for multi-energy hubs. However, it is restricted to conventional/non-renewable energy resources which are dispatchable and certain in nature. Further, there is no uncertainty due in the generation of energy due to external factors and supply side uncertainty and the constraints related to energy converters are not modelled.

The present disclosure resolves the scheduling and trading portfolio optimization problem by linking the optimal scheduling problem to classical measures of investment and portfolio theory using MV-PO. In the present disclosure, this problem is overcome by providing an integrated one-step scheduling-cum-trading framework. To improve sustainability and increase consumption of different forms of energy, it is necessary to develop an integrated model for optimal scheduling and trading of energy that provides maximum financial incentives for EH. In the present disclosure, a dynamic optimization model is provided for an EH consisting of a set of multi-energy generators. This dynamic optimization model helps EH operators maximize realized profits from selling energy in multiple forms and minimize uncertainties arising from DAM price fluctuations and the intermittency of renewable energy production.

Embodiments of the present disclosure provide a system and method for simultaneous energy scheduling and trading portfolio optimization for an energy hub. In the present disclosure, a generic scheduling-cum-trading framework is provided for an EH covering various energy types, based on Markowitz portfolio theory approach. This framework is scalable in terms of the number of assets, energy types and trading options it can accommodate. Furthermore, the framework takes into account supply and demand side uncertainties due to RES generation intermittency and day-ahead market (DAM) price variations, respectively. Numerical simulations were performed on a standalone EH setup to study the effectiveness of the framework over different scenarios. It is found that adding the asset classes such as energy converters and energy storage increase EH's realized profits by 10%, as well as increase EH's overall performance by 8.2% compared to EH without converter and storage. Additionally, the framework recommends an optimal trading portfolio for EH operator based on their risk tolerance, adjusting their exposure to market price uncertainties. For a risk-seeking EH operator, the framework can generate 83.5% more realized profits using the DAM price variations. More specifically, the present disclosure describes the following:

1. A robust scheduling-cum-trading PO framework for an EH considering multiple forms of energy
2. Market price risk model is considered by building upon Markowitz Portfolio Theory

3. Asset constraints model of generators is considered capturing Min-Max and Ramping capacity limits

4. Asset constraints model of energy converters is considered capturing Min-Max limits and inter-energy conversion efficiencies

5. Storage model is considered to help with price and demand arbitrage and minimizing risks

6. Uncertainty model of RES generators is considered using RO-Fixed and variable bilateral demand volumes are considered

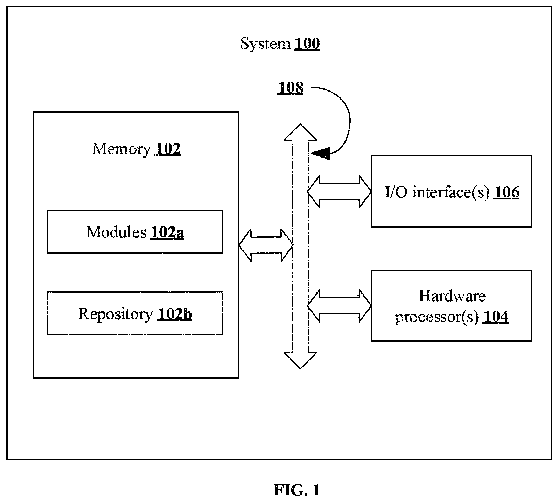

Referring now to the drawings, and more particularly to FIGS. 1 through 12, where similar reference characters denote corresponding features consistently throughout the figures, there are shown preferred embodiments and these embodiments are described in the context of the following exemplary system and/or method.

FIG. 1 illustrates an exemplary block diagram of a system for simultaneous energy scheduling and trading portfolio optimization for an energy hub, in accordance with some embodiments of the present disclosure.

In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface, and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computer, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. Further, the memory 102 may include information pertaining to input(s)/output(s) of each step performed by the processor(s) 104 of the system 100 and methods of the present disclosure. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

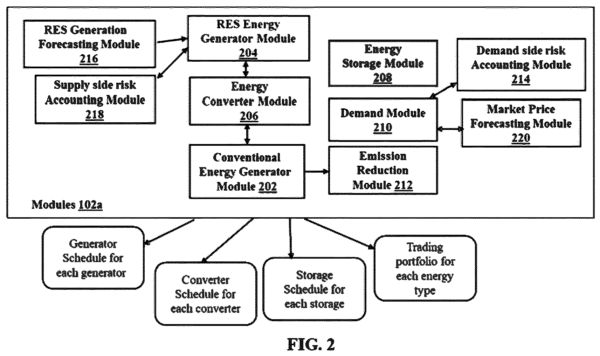

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. The plurality of modules 102a can include various sub-modules (not shown). The plurality of modules 102a may include computer-readable instructions that supplement applications or functions performed by the system 100 for simultaneous energy scheduling and trading portfolio optimization for an energy hub. For example, the plurality of modules 102a includes a non-renewable energy source energy generator module 202 (shown in FIG. 2), a renewable energy source energy (RES) energy generator module 204 (shown in FIG. 2), an energy converter module 206 (shown in FIG. 2), an energy storage module 208 (shown in FIG. 2), a demand module 210 (shown in FIG. 2), and an emission reduction module 212 (shown in FIG. 2), a demand side risk accounting module 214 (shown in FIG. 2), RES generation forecasting module 216 (shown in FIG. 2), and a supply side risk accounting module 218 (shown in FIG. 2), and a market price forecasting module 220(shown in FIG. 2).

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, new data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

FIG. 2 illustrates a broad level functional block diagram for a processor implemented method for simultaneous energy scheduling and trading portfolio optimization for an energy hub, in accordance with some embodiments of the present disclosure.

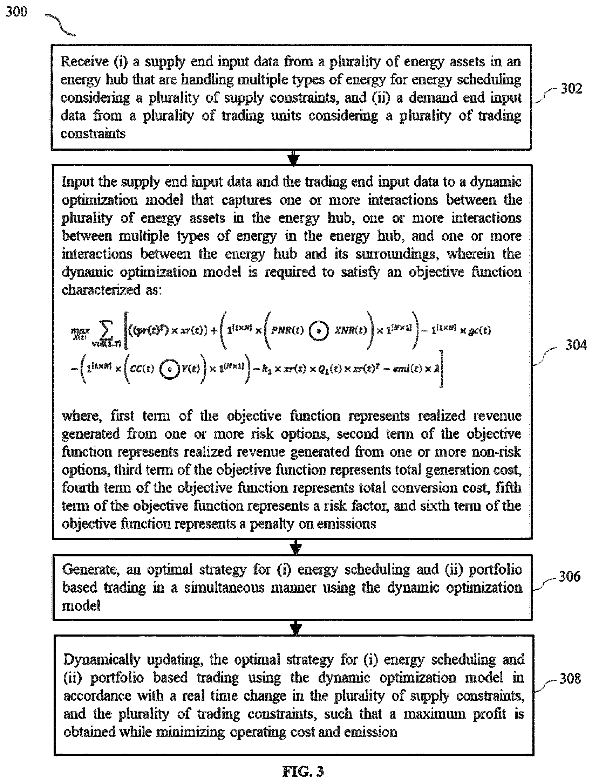

FIG. 3 illustrates an exemplary flow diagram illustrating a method for simultaneous energy scheduling and trading portfolio optimization for an energy hub, using the system of FIG. 1, in accordance with some embodiments of the present disclosure.

Referring to FIG. 3, in an embodiment, the system 100 comprises one or more data storage devices or the memory 102 operatively coupled to the one or more hardware processors 104 and is configured to store instructions for execution of steps of the method by the one or more processors 104. The steps of the method 200 of the present disclosure will now be explained with reference to components of the system 100 of FIG. 1, the block diagram as depicted in FIG. 2, the flow diagram as depicted in FIG. 3, and one or more examples. Although steps of the method 300 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

In an embodiment, at step 302 of the present disclosure, the one or more hardware processors 104 are configured to receive i) a supply end input data from a plurality of energy assets in an energy hub that are handling multiple types of energy for energy scheduling considering a plurality of supply constraints, and (ii) a demand end input data from a plurality of trading units considering a plurality of trading constraints. The plurality of energy assets units in the energy hub comprises a first set of energy generators, a second set of energy generator, a set of energy storages, and a set of energy converters. The plurality of trading units comprises a demand unit and an emission unit. The first set of energy generators are the set of non-renewable (i.e., conventional) energy generators and the second set of energy generators are the set of renewable energy sources (RES) generators. In an embodiment, an uncertainty factor is associated with the RES generators.

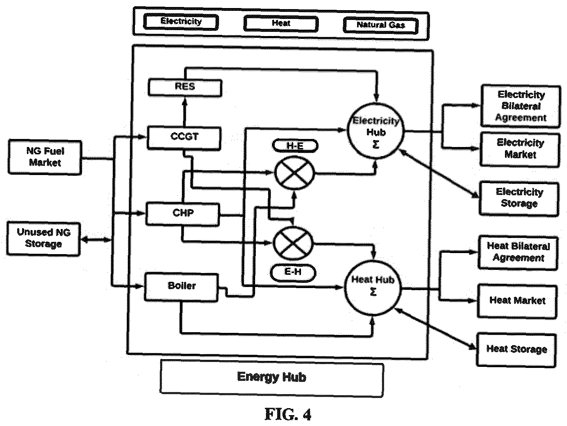

FIG. 4 depicts a block diagram illustrating representation of an independent example energy hub (EH), in accordance with some embodiments of the present disclosure. As shown in FIG. 4, the energy hub is comprising of two types of energy carriers namely electricity and heat. It is considered that the energy hub consists of a set of conventional energy generators represented by $G = \left\{ \bigcup_{g=1}^{TG_{et}} G_{et}^{g} ; \forall et \in \{1 \ldots N\} \right\}$, a set of RES generators represented by $R = \left\{ \bigcup_{g=1}^{TR_{et}} R_{et}^{r} ; \forall et \in \{1 \ldots N\} \right\}$, and set of energy storage's $S = \left\{ \bigcup_{g=1}^{TS_{et}} S_{et}^{s} ; \forall et \in \{1 \ldots N\} \right\}$, set of energy converters capable of converting one form of energy to another form of energy $C = \left\{ \bigcup_{s=1, t=1}^{N,N} C_{s,t} \right\}$, where, $N$ is the total number of energy types handled by the EH, where $TG_{et}$, $TR_{et}$ and $TS_{et}$ denotes total number of conventional energy generators, renewable energy generators and energy storage's in the EH for energy type et. In the present disclosure, in G set representation, multi-energy generators are considered followed by single energy generators in that order.

In EH setup of the present disclosure, EH can sell produced energy into different day-ahead markets (DAMs) or trade via bilateral agreements (BLA) with customers. Let m = $\{m_1, m_2, \cdots, m_N\}$ be the set of N day ahead energy type markets, $fb = \{fb_1, fb_2, \cdots, fb_N\}$ be a set of fixed type bilateral agreement between EH and consumers, and $vb = \{vb_1, vb_2, \cdots, vb_N\}$ be a set of variable type bilateral agreement between EH and consumers. It can be assumed that one type of energy can be converted into another and can be consumed according to the following options: a) sold in the DAM b) traded via fixed or variable bilateral agreement or c) stored in an energy storage for later use or d) a combination of the previous options. This assumption is valid in situations where the converted energy is likely to produce superior results and the generator cannot directly produce the optimal amount of energy required. The generator can have limits on the different energy outputs due to its design specifications. These limits include: 1) minimum and maximum capacity limits and 2) ramp-up and ramp-down capacity limits. Equation (1) below provides $gv(t)$ which represents total initial generation volumes of different energy types generated by an EH for time-period $t$:

$$\mathbf{gv}(t) = \begin{bmatrix} gv_{et}(t) + gvRES_{et}(t); \\ \forall et \in \{1 \dots N\} \end{bmatrix}^{N \times 1} = \Psi_{gv}(\mathcal{G}(t), \mathcal{R}(t)); \quad \forall t \in \{1 \dots T\} \quad (1)$$

Here, $gv_{et}(t)$ denotes total energy volume of energy type et generated by conventional energy sources ($G(t)$)), $gvRES_{et}(t)$ denotes total energy volume of energy type $et$ generated by renewable energy sources ($R(t)$), $\psi gv()$ function returns the energy type-wise volume cumulatively generated by the generators $G$ and $R$ in the EH at time block $t \in \{1 \dots T\}$. However, production volumes from renewable energy sources depend on weather conditions, solar radiation and other factors which are beyond control. Therefore, the production volume $gvRES_{et}(t)$ from RES generators $R$ is intermittent and involves uncertainty. This uncertainty is modeled using a robust optimization technique. Equation (2) below shows calculation of $gv_{et}(t)$ representing total energy volume of energy type et generated by conventional energy sources $(G(t))$:

$$gv_{et}(t) = \sum_{n=1}^{TG_{et}} gv^n_{et}(t); \forall et \in \{1..N\}; \forall t \in \{1..T\} \qquad (2)$$

Equation (3) below shows calculation of $gvRES_{et}(t)$ representing total energy volume of energy type et generated by renewable energy sources (R(t)):

$$gvRES_{et}(t) = \sum_{n=1}^{TR_{et}} gvRES^n_{et}(t); \forall et \in \{1..N\}; \forall t \in \{1..T\} \qquad (3)$$

Equation (4) below shows calculation of $\mathbf{gc}(t)$ representing total cost to generate different energy types by an EH for time-period $t$:

$$\mathbf{gc}(t) = [gc_{et}(t); \forall et \in \{1..N\}]^{N \times 1} = \Psi_{gc}(\mathcal{G}(t)); \quad \forall t \in \{1..T\} \qquad (4)$$

Here, $gc_{et}(t)$ represents cost of generating energy type et by an EH at time block $t$. Equation (5) below shows calculation of $gc_{et}(t)$:

$$gc_{et}(t) = \sum_{n=1}^{TG_{et}} gc^n_{et}(t); \forall et \in \{1..N\}; \forall t \in \{1..T\} \qquad (5)$$

The function $\psi gc()$ returns energy type-wise generation cost by the conventional generators $G$ in the EH at time $t$. It is assumed that there are no operating costs associated with generating energy from renewable energy sources such as solar and wind utilities because there are no fuel input requirements.

The EH contains a set of energy converters $C$, capable of converting energy from one form to another. Equation (6) below shows energy conversion efficiency matrix $CE$ with a dimensionality of size $\mathbb{R}^{N \times N}$:

$$CE = \begin{bmatrix} 1 & \rho_{1,2} & \cdot & \rho_{1,N} \\ \cdot & \cdot & \cdot & \cdot \\ \rho_{N,1} & \rho_{N,2} & \cdot & 1 \end{bmatrix}^{N \times N} \qquad (6)$$

The energy conversion efficiency matrix $CE$ captures conversion efficiency value of the converters in $C$. In this matrix, each term ($\rho_{i,j}$) represents the conversion efficiency from energy type $i$ to energy type $j$. The diagonal elements of the matrix are equal to 1, signifying that there is a lossless conversion when the conversion involves the same type of energy at the source and destination. If there is an energy converter in the EH to convert energy type $i$ to energy type $j$, then conversion efficiency of the energy converter is the value captured by $(\rho_{i,j})^{th}$ element, otherwise the conversion efficiency value is 0. It is important to note that the value of $\rho_{i,j}$ is bounded by a range from 0 and 1. Equation (7) below captures the relationship between total initial generation volumes $gv(t)$ and the converted energy volumes split represented by $Y(t)$:

$$\mathbf{gv}(t) = \left(\frac{1}{\mathrm{CE}} \odot \mathbf{Y}(t)\right)^{N \times N} \times 1^{[N \times 1]}; \ \forall t \in \{1..T\} \qquad (7)$$

Equation (8) below refers to resultant converted energy volumes represented by $Y(t)$:

$$\mathbf{Y}(t) = \begin{bmatrix} \mathcal{Y}_{1,1}(t) & \mathcal{Y}_{1,2}(t) & . & \mathcal{Y}_{1,N}(t) \\ . & . & . & . \\ \mathcal{Y}_{N,1}(t) & \mathcal{Y}_{N,2}(t) & . & \mathcal{Y}_{N,N}(t) \end{bmatrix}^{N \times N} ; \forall t \in \{1..T\} \qquad (8)$$

Here, $Y_{i,j}(t)$ represents volume of energy of type $i$ that has been converted to energy type $j$ at time block $t$, and operator $\odot$ is the Hadamard product of two equidimensional matrices. A term $o(t)$ in $\mathbb{R}^{N \times 1}$, represents final output energy volume of the EH after conversion for each energy type $et \in \{1.. N\}$. These output energy volume elements in $o(t)$ are derived from $Y(t)$ according to the Equation (9) as shown below:

$$\mathbf{o}(t) = \begin{bmatrix} o_1(t) \\ o_2(t) \\ . \\ o_N(t) \end{bmatrix}^{N \times 1} = \mathbf{Y}(t)^T \times 1^{[N \times 1]}; \ \forall t \in \{1..T\} \quad (9)$$

The final energy volumes in $o(t)$ can be distributed across different consumer portfolio options such as: a) traded directly in the multi-energy DAM, b) traded through fixed and variable multi-energy bilateral agreements, c) can also be stored in storage of specific energy type to effectively take advantage of arbitrage opportunities. In EH setup of the present disclosure, a set of these portfolios are considered as:

*options = {market, fixed - bilateral, variable - bilateral, storage - charging, storage - discharging}.*

The allocation of the final output energies in o(t) is represented as $X(t)$ across portfolio options. The relationship between the final output energy volumes $o(t)$ and the portfolio options or choices represented by $X(t)$ decision variable is expressed through the Equation (10) as shown below:

$$X(t) \times 1^{[|option| \times 1]} = \mathbf{o}(t)^T; \ \forall t \in \{1..T\} \qquad (10)$$

Equation (11) below provides a portfolio options decision variable $X(t)$ which is a matrix in $\mathbb{R}^{N \times |options|}$ representing portfolio split of final energy volumes in $o(t)$ for each energy type:

$$\mathbf{X}(t) = \begin{bmatrix} x_1^m(t) & x_1^{\mathrm{fb}}(t) & x_1^{vb}(t) & x_1^c(t) & x_1^d(t) \\ x_2^m(t) & x_2^{\mathrm{fb}}(t) & x_2^{vb}(t) & x_2^c(t) & x_2^d(t) \\ . & . & . & . & . \\ x_N^m(t) & x_N^{\mathrm{fb}}(t) & x_N^{vb}(t) & x_N^c(t) & x_N^d(t) \end{bmatrix}^{N \times |options|} ; \forall t \in \{1..T\} \qquad (11)$$

The portfolio choices available are shown by terms $X_i^m(t), X_i^{\mathrm{fb}}(t), X_i^{vb}(t), X_i^c(t)$ and $X_i^d(t)$. Each of these terms represents respective proportion of final energy output of type $i$ that are traded in the DAM, transacted through fixed bilateral agreements (FBA), variable bilateral agreements (VBA), utilized for charging the energy storage and discharged from the energy storage during time block $t$. Equation (12) below a matrix $P(t)$ in $\mathbb{R}^{N \times |options|}$ which represents the prices of the DAM, fixed bilateral agreements, variable bilateral agreements, charging cost, and discharging cost of using energy storage of each energy type in EH for each time block $t$:

$$\mathbf{P}(t) = \begin{bmatrix} p_1^m(t) & p_1^{\text{fb}}(t) & p_1^{vb}(t) & -p_1^c(t) & -p_1^d(t) \\ p_2^m(t) & p_2^{\text{fb}}(t) & p_2^{vb}(t) & -p_2^c(t) & -p_2^d(t) \\ \cdot & \cdot & \cdot & \cdot & \cdot \\ p_N^m(t) & p_N^{\text{fb}}(t) & p_N^{vb}(t) & -p_N^c(t) & -p_N^d(t) \end{bmatrix}^{N \times |options|} \quad ; \forall t \in \{1..T\} \quad (12)$$

Here, the charging and discharging costs are energy storage degradation costs calculated based on [] as shown in Equation (13) below:

$$p_{et}^c(t) = p_{et}^d(t) = \sum_{n=1}^{TS_{et}} \frac{RC_{et}^n}{TCDC_{et}^n} ; \forall et \in \{1..N\} \quad (13)$$

Here, the terms $RC_{et}^n$ and $TCDC_{et}^n$ specify replacement cost and total charge/discharge capacity of the energy storage unit $S_{et}^n$ with index $n \in \{1.. TS_{et}\}$ of energy type $et \in \{1..N\}$.

Further, without loss of generality, it is assumed that energy markets are open, and prices are discovered based on requests and offers by buyers and sellers, respectively. The prices in these markets thus can be considered volatile and have risks associated with them, whereas the prices of fixed and variable bilateral agreements are known prior, so they do not have any risk associated with them. Therefore, the price matrix $P(t)$ and portfolio option decision matrix $X(t)$ can be partitioned depending on level of risk associated with price and portfolio options into two components: a) the risk part and b) non-risk part. The risk component of the price and portfolio split matrix is symbolized as **pr**($t$) and **xr**($t$) in $\mathbb{R}^{N \times |riskoptions|}$ as depicted in the Equation (14) below:

$$\mathbf{xr}(t) = \begin{bmatrix} x_1^m(t) \\ x_2^m(t) \\ \cdot \\ x_N^m(t) \end{bmatrix}^{N \times 1} ; \mathbf{pr}(t) = \begin{bmatrix} p_1^m(t) \\ p_2^m(t) \\ \cdot \\ p_N^m(t) \end{bmatrix}^{N \times 1} ; \forall t \in \{1..T\} \quad (14)$$

Here, *riskoptions* = 1, as only DAM prices carry variability.

Conversely, the non-risk component is designated as **PNR**($t$) in $\mathbb{R}^{N \times |options|}$ and **XNR**($t$) in $\mathbb{R}^{N \times |options|}$ as illustrated in the Equation (15) and Equation (16) respectively are shown below:

$$\mathbf{PNR}(t) = \begin{bmatrix} p_1^{\text{fb}}(t) & p_1^{vb}(t) & -p_1^c(t) & -p_1^d(t) \\ p_2^{\text{fb}}(t) & p_2^{vb}(t) & -p_2^c(t) & -p_2^d(t) \\ \cdot & \cdot & \cdot & \cdot \\ p_N^{\text{fb}}(t) & p_N^{vb}(t) & -p_N^c(t) & -p_N^d(t) \end{bmatrix}^{N \times |options|} \quad ; \forall t \in \{1..T\} \quad (15)$$

$$\mathbf{XNR}(t) = \begin{bmatrix} x_1^{fb}(t) & x_1^{vb}(t) & x_1^c(t) & x_1^d(t) \\ x_2^{fb}(t) & x_2^{vb}(t) & x_2^c(t) & x_2^d(t) \\ \cdot & \cdot & \cdot & \cdot \\ x_N^{fb}(t) & x_N^{vb}(t) & x_N^c(t) & x_N^d(t) \end{bmatrix}^{N \times |options|} \quad ; \forall t \in \{1..T\} \quad (16)$$

Let $pr(t) = [p_1^m(t), p_2^m(t), ... p_N^m(t)]^T$ be the DAM price vector. EH trades in these markets the previous day and therefore uses DAM's price forecast $\hat{p}r(t)$ to make allocation decisions. Market price risk can be quantified using a price covariance matrix as expressed in Equation (17):

$$\boldsymbol{Q}_1(t) = E[(\boldsymbol{pr}(t) - E[pr(t)])^T (pr(t) - E[pr(t)])]; \ \forall t \in \{1..T\} \qquad (17)$$

EH is considered a price taker in the DAM which means that total traded amount is cleared by respective market operators/exchanges. The problem of EH is to optimize generation portfolio for each energy generator represented by $g^*v$ (t), final output energies portfolio represented by $o^*(t)$ as well as decide on optimal quantities to be traded in the various available options represented by $X^*(t)$ considering the various limits on the energy outputs.

At step 304 of the present disclosure, the one or more hardware processors 104 are configured to input the supply end input data and the trading end input data to a dynamic optimization model that captures one or more interactions between (i) the plurality of energy assets in the energy hub, (ii) multiple types of energy in the energy hub, (iii) the energy hub and its ecosystem. The problem of finding optimal trading quantities for each of the different final output energy types can be formulated utilizing the standard Markowitz portfolio theory. In the dynamic optimization model, the Markowitz portfolio theory is extended to include multi-energy markets, taking into account the constraints imposed by the multi-energy generators, converters, storage systems, potential risks associated with intra and inter-energy market prices, and risks related to RES generation intermittency. In an embodiment, the dynamic optimization model is required to satisfy an objective function characterized as:

$$\max_{X(t)} \sum_{\forall t \in \{1..T\}} \Big[ \big((pr(t)^T) \times xr(t)\big) + \big(1^{[1 \times N]} \times \big(PNR(t) \odot XNR(t)\big) \times 1^{[N \times 1]}\big)$$

$$- 1^{[1 \times N]} \times gc(t) - \Big(1^{[1 \times N]} \times \big(CC(t) \odot Y(t)\big) \times 1^{[N \times 1]}\Big)$$

$$- k_1 \times xr(t) \times Q_1(t) \times xr(t)^T - emi(t) \times \lambda \Big]$$

where, a first term of the objective function represents realized revenue generated from one or more risk options, a second term of the objective function represents realized revenue generated from one or more non-risk options, a third term of the objective function represents total generation cost, a fourth term of the objective function represents total conversion cost, a fifth term of the objective function represents a risk factor, and a sixth term of the objective function represents a penalty on emissions. Here, $pr(t)$ represents a risk component of a price matrix depicting price associated with one or more trading options at time block $t$, $xr(t)$ represents a risk component of a portfolio split matrix at time block $t$, $PNR(t)$ represents a non-risk component of the price matrix depicting price associated with the one or more trading options at time block $t$, $XNR(t)$ represents a non-risk component of a portfolio split matrix at time block $t$, $gc(t)$ represents total cost to generate one or more energy types by the EH for time block $t$, $CC(t)$ represents an energy conversion cost matrix at time block $t$, $Y(t)$ represents a resultant converted energy volume matrix at time block $t$, $k_1$ represents a risk aversion coefficient, $Q_1(t)$ represents a day-ahead market (DAM) price covariance matrix at time block $t$, $emi(t)$ represents total $CO_2$ emissions produced by the EH at time block $t$, and $\lambda$ represents an emission penalization cost. In other words, the objective function aims to maximize realized profit while simultaneously minimizing associated risks. The first term of the objective function denotes the realized revenue generated from multi-energy DAM's, considering the market clearing price. The second term refers to the realized revenue generated by fixed and variable bilateral agreements with predetermined prices, storage charges and discharge prices. The third and fourth terms represent the generation costs and conversion costs, respectively. The fifth term accounts for risks associated with market prices with $k_1$ representing risk aversion factors for market price risk. A higher value of the risk aversion factor implies that the EH is willing to take on lower risk, while a lower value implies a willingness to take on higher risk. The last term represents the emissions penalty, with $\lambda$ representing the penalization cost.

In the objective function, $\boldsymbol{CC}(t)$ represents energy conversion cost matrix in $\mathbb{R}^{N \times N}$ and $emi(t)$ represents total $CO_2$ emissions produced by the EH at time-block $t$. The energy conversion cost matrix is calculated using the equation (19) shown below:

$$\boldsymbol{CC}(t) = \begin{bmatrix} 0 & cc_{1,2}(t) & . & cc_{1,N}(t) \\ . & . & . & . \\ cc_{N,1}(t) & cc_{N,2}(t) & . & 0 \end{bmatrix}; \forall t \in \{1..T\} \qquad (19)$$

In equation (19), the diagonal elements of the matrix are 0 as there is no conversion cost incurred for the same energy-to-energy conversion. Each term $\boldsymbol{cc}_{i,j}$ of the energy conversion cost matrix denotes cost to convert one unit of energy from type $i$ to type $j$. If an energy converter exists in EH for conversion of $i^{th}$ energy type to $j^{th}$ energy type, then the value captured by the element $cc_{i,j}$ represents conversion cost else conversion cost is considered as $\infty$.

The total emissions produced are calculated using the equation (20) shown below:

$$emi(t) = \sum_{n=1}^{TG_{et}} \sum_{et=1}^{N} \frac{gv_n^{et}(t)}{ef f_n^{et} \times \delta} \times \mu; \; \forall t \in \{1..T\} \qquad (20)$$

Here, $\delta$ represents calorific value of input fuel and $\mu$ represents $CO_2$ emission factor of the input fuel.

At step 306 of the present disclosure, the one or more hardware processors 104 are configured to generate an optimal strategy for (i) energy scheduling and (ii) portfolio based trading in a simultaneous manner using the dynamic optimization model. In an embodiment, the dynamic optimization model is a mean variance portfolio optimization model. Further, at step 308 of the present disclosure, the one or more hardware processors 104 are configured to dynamically update the optimal strategy for (i) energy scheduling and (ii) portfolio based trading using the dynamic optimization model in accordance with a real time change in the plurality of supply constraints, and the plurality of trading constraints, such that a maximum profit is obtained while minimizing operating cost and emission. The dynamic optimization model dynamically updates the optimal strategy for (i) energy scheduling and (ii) portfolio based trading due to its sensitivity to different parameters inside and outside the EH. Any change in parameter values affects the level of interaction between different entities in the system. Some parameters that affect the model results are DAM price, risk aversion coefficient and RES uncertainty coefficient.

In an embodiment, the plurality of supply constraints comprise at least one of (i) one or more generator asset constraints, (ii) one or more robust optimization (RO) constraints, (iii) one or more conversion constraints, and (iv) one or more storage constraints. The trading constraints comprise at least one of (i) one or more cost related constraints, (ii) one or more demand side risk constraints, and (iii) one or more regulatory requirements based constraints. In an operational EH consisting of different asset types, each asset must comply with prescribed operating threshold limits to ensure both asset safety and optimal operational performance. These limits are modeled as constraints separately for each asset type. The one or more generator asset constraints may comprise but are not limited to fuel constraints, ramping constraints, inter-energy generator constraints, minimum operation level and maximum capacity limits, charging and discharge constraints, supply end risk constraints, and/or the like. Energy generators are subject to ramp limitations when moving from one level of production to another. Additionally, the energy generator cannot operate below a threshold known as a minimum generation capacity. Similarly, the maximum generation output is limited by a maximum capacity of the generator. Equations (21) and (22) below have been formulated to ensure that the generator output strictly complies with to the prescribed minimum, maximum, ramp-down and ramp-up limits denoted by $\phi_{-et}^{n}$, $\phi_{et}^{-n}$, $R_{et}^{n}$, $\overline{R_{et}^{n}}$ respectively for each time slot $t$:

$$\phi_{-et}^{n} \leq gv_{et}^{n}(t) \leq \phi_{et}^{-n}; \; \forall et \in \{1..N\}; \; \forall n \in \{1..TG_{et}\}; \; \forall t \in \{1..T\} \qquad (21)$$

$$-\underline{R_{et}^{n}} \leq gv_{et}^{n}(t) - gv_{et}^{n}(t-1) \leq \overline{R_{et}^{n}}; \; \forall et \in \{1..N\}; \; \forall n \in \{1..TG_{et}\}; \; \forall t$$
$$\in \{1..T\} \qquad (22)$$

In the case of multi-energy generators, the generation volume of one type of energy is intricately linked to the generation volume of another type of energy. This relationship is established by the energy generator's operational region and must be considered to ensure optimal operational performance. Equation (23) below follows these relationships, with $\zeta_{et_j}^{n}$ acting as a correlation between the generation volumes of the two energy types $et_i$ and $et_j$:

$$gv_{et_i}^{n}(t) = \zeta_{et_j}^{n} \times gv_{et_j}^{n}(t); \; \forall et_i, et_j \in \{1..N\}, et_i \neq et_j \; \forall n \in \{1..TG_{et}\}; \; \forall t$$
$$\in \{1..T\} \qquad (23)$$

It is noted that this correlation may vary between different energy generators. For a back-pressure type *CHP* which generates two energy types (i.e., electricity and heat), $\zeta_{et_h}^{CHP}$ denotes a power-to-heat ratio of energy generator. Similarly, for other types of multi-energy generators, appropriate relationships between multiple energy generations can be added to the constraint set.

In an embodiment, the one or more robust optimization (RO) constraints may comprise but are not limited to a RES uncertainty coefficient, and/or the like. RES provides a sustainable alternative energy source for EH that is environmentally friendly and operates more efficiently. However, the renewable energy generation is limited by many factors such as cloud cover, solar radiation, solar declination, wind speed, and/or the like, all of which are uncontrollable. These uncontrollable factors cause uncertainty in renewable energy production, further disrupting the supply-demand balance. The dynamic optimization model of the present disclosure provides in advance the optimal scheduling and trading portfolio for the EH asset and the EH operator respectively, for the next day. To make optimal decisions, the dynamic optimization model requires accurate information about hourly RES production volumes, which is otherwise impossible to obtain. Therefore, different forecasting models are used to forecast the renewable energy production profile and obtain a forecast schedule that reflects the actual profile. Despite these efforts, there is still uncertainty associated with renewable energy production, which can lead to suboptimal solutions. To solve this problem, RO techniques are used to find the optimal balance between realized profit and the level of uncertainty. An uncertainty factor $U$ is used to control incidence of EH to RES generation. In other words, the volume of RES production cannot be controlled because it depends on many natural factors and is therefore not a controllable variable. Therefore, it is a parameter whose value is determined using historical values and is denoted by $gv\widehat{RES}_{et}^{r}(t)$. However, the predicted value does not reflect reality and carries a certain degree of uncertainty. Suppose $U_{RES}$ is the RES uncertainty set which is defined as

$$\left\{gv\widehat{RES}_{et}^{r}(t) \times (1 - uf),.,0,.,gv\widehat{RES}_{et}^{r}(t) \times (1 + uf)\right\}$$. Then the actual RES generated volume

$gv\widehat{RES}_{et}^{r}(t)$ should lie in this set which is modeled in Equations (24) and (25) below:

$$gv\widehat{RES}_{et}^{r}(t) \times (1 - uf) \leq gv\boldsymbol{RES}_{et}^{r}(t) \leq gv\widehat{RES}_{et}^{r}(t) \times (1 + uf); \forall et$$

$$\in \{1..N\}; \ \forall r \in \{1..TR_{et}\}; \ \forall t \in \{1..T\} \qquad (24)$$

$$gv\boldsymbol{RES}_{et}^{r}(t) \geq 0; \forall et \in \{1..N\}; \ \forall r \in \{1..TR_{et}\}; \ \forall t \in \{1..T\} \qquad (25)$$

Here, *uf* is the uncertainty factor which lies between 0 and 1. Applying the one or more RO constraints to the equation (24) changes it to the equation (26) shown below:

$$gv\boldsymbol{RES}_{et}^{r}(t) = gv\widehat{RES}_{et}^{r}(t) \times (1 - uf); \forall et \in \{1..N\}; \ \forall r \in \{1..TR_{et}\}; \ \forall t$$

$$\in \{1..T\} \qquad (26)$$

Based on seminal RO work in an existing approach, a standard robust quadratic programming problem is of the form:

$$\max_{x} c^{T}x + x^{T}Qx$$

$$\text{s.t} \quad a_{i}x \leq b_{i}, \forall a_{i} \in Ua_{i}, \forall bi \in Ub_{i}, i = 1,\ldots,m$$

$$c_{i}x = d_{i}, \forall c_{i} \in Uc_{i}, \forall d_{i} \in Ud_{i}, i = 1,\ldots,m$$

Here, *Ua_i* and $Uc_i \subseteq \mathbb{R}^{n}$ and *Ub_i* and $Ud_i \subseteq \mathbb{R}$ are given uncertainty sets. Given, the uncertainty sets are polyhedra (i.e., *Ua_i* = {*i*|*P_j a_i* ≤ p_i}), where, $P_i \in \mathbb{R}^{k_i \times n}$ and $p_i \in \mathbb{R}^{k_i}$ are given as input. Similarly, each *Ub_i*, *Uc_i* and *Ud_i* is in a given interval in $\mathbb{R}$. The uncertainty of *bi* can be eliminated by considering the lower end of the interval, so the constraint becomes as $a_{i}x \leq b_{i}^{min}$, where $b_{i}^{min}$ is the lower interval of *Ub_i*. Applying similar connotation to the dynamic optimization model containing RES uncertainty in the *b_i* component. Considering Equation (24), *Ub_i* is in the

range $\{gv\widehat{RES}_{et}^r(t) \times (1-uf),.,0,.,gv\widehat{RES}_{et}^r(t) \times (1+uf)\}$. Taking the lower interval of it $b_i^{min}$ becomes equal to $gv\widehat{RES}_{et}^r(t) \times (1-uf)$. Therefore, the Equation (24) becomes:

$$gvRES_{et}^r(t) = gv\widehat{RES}_{et}^r(t) \times (1-uf); \ \forall et \in \{1..N\}; \ \forall r \in \{1..TR\}; \ \forall t \in \{1..T\};$$

Solving the RO-updated problem, the dynamic optimization model can find a balance between realized profit and uncertainty. As the RES uncertainty coefficient decreases, the model's exposure to uncertain components increases, leading to increased realized returns. However, this increase comes with higher uncertainty.

In an embodiment, the one or more conversion constraints may comprise but are not limited to minimum operation limit, maximum conversion limit, conversion efficiency, and/or the like. The energy converters are subject to limits constraints, that is they must not be operated below a designated threshold limit, referred to as the minimum operation level, and their maximum conversion is restricted by its maximum capacity. Equation (27) below has been formulated to ensure that the converter's output conforms strictly to the prescribed min-max limits for each time slot:

$$C_{i,j}^d \le \mathcal{Y}_{i,j}(t) \times \rho_{i,j} \le C_{i,j}^u; \ \forall i,j \in \{1..N\}, i \ne j, \forall t \in \{1..T\} \qquad (27)$$

Here, $C_{i,j}^d$ and $C_{i,j}^u$; are the minimum and maximum capacity of the converter supporting the conversion of $i^{th}$ energy to $j^{th}$ energy.

In an embodiment, the one or more storage constraints may comprise but are not limited to minimum storage limit, maximum storage limit, charging rate and discharging rate of energy storage, and/or like. Equation (28) below handles the modification of the state-of-charge (SoC) levels of the energy storage's.

$$soc_{et}(t) = soc_{et}(t-1) + x_{et}^c(t) \times x\eta_{et}^{ch} - \frac{x_{et}^a(t)}{\eta_{et}^{dis}}; \ \forall et \in \{1..N\}, \ \forall t \in \{1..T\} \qquad (28)$$

The SoC levels are supported within the prescribed operational limits of the energy storage, as guaranteed by equation (29) below:

$$soc_{et}^d(t) \le soc_{et}(t) \le soc_{et}^u; \ \forall et \in \{1..N\}, \forall t \in \{1..T\} \qquad (29)$$

Equations (30) and (31) impose constraints on the rate at which an energy storage can either charge or discharge energy.

$$0 \le x_{et}^c(t) \le C_{et}^{rate} \times U_{et}^{ch}; \ \forall et \in \{1..N\}, \forall t \in \{1..T\} \qquad (30)$$

$$0 \le x_{et}^d(t) \le DC_{et}^{rate} \times (1 - U_{et}^{ch}); \ \forall et \in \{1..N\}, \forall t \in \{1..T\} \qquad (31)$$

Equation (32) ensures that only one of the charging or discharging processes can occur during any given time block.

$$U_{et}^{ch} \in \{0,1\}; \ \forall et \in \{1..N\} \qquad (32)$$

Equation (33) guarantees the preservation of the energy storage's SoC by the end of the day.

$$soc_{et}(t_0) = soc_{et}(t_T) \quad (33)$$

The terms $soc_{et}^d(t),\ soc_{et}^u,\ C_{et}^{rate}$ and $DC_{et}^{rate}$ denotes the minimum storage limit, maximum storage limit, charging rate and discharging rate of energy storage of type $et$ respectively. In an embodiment, the cost related constraints for trading may comprise but are not limited to day-ahead market (DAM) price, degradation cost, energy conversion costs, and/or the like. The demand side risk constraints may include risk aversion coefficient, and/or the like. The one or more regulatory requirements based constraints includes fixed bilateral agreements, variable bilateral agreements, and/or the like. A bilateral agreement contract refers to a contractual arrangement between an EH and a utility, wherein the EH is permitted to sell its energy at a predetermined price. This agreement serves as a safeguard for the EH, guaranteeing a steady demand for its energy production. In general, bilateral agreements can be classified two types: fixed bilateral agreements where the EH is obligated to sell a specific volume of generated energy to the utility, and variable bilateral agreements where the EH is required to sell a certain volume of generated energy within a mutually agreed range. Equation (34) and (35) represent the constraints imposed by the two distinct forms of bilateral agreements on the EH:

$$x_{et}^{fb}(t) = V_{et}(t);\ \forall et \in \{1..N\}, \forall t \in \{1..T\} \qquad (34)$$

$$-V_{et}^l(t) \leq x_{et}^{vb}(t) \leq V_{et}^h(t);\ \forall et \in \{1..N\};\ \forall t \in \{1..T\} \qquad (35)$$

Certain EH utilizes equation (34), while others employ equation (35), or a combination of both depending on the stipulations outlined in the terms of agreement. The term Vet(t) specifies the fixed bilateral agreement on the energy type et at time slot $t$ and the terms V 1 et(t) , V h et(t) denotes the mutually agreed range of energy type $et$ at time block $t$.

Further, there are some inequality constraints represented by equations (36), (37), (38), (39), (40), and (41). The equations (36), (37), (38), and (39) guarantee that the portfolio allocations to DAM, fixed bilateral agreements, variable bilateral agreements, and energy storage for charging is greater than or equal to zero.

$$\mathbf{xr}(t) \geq \mathbf{0}; \forall t \in \{1..T\} \quad (36)$$

$$x_{et}^{fb}(t) \geq \mathbf{0};\ \forall et \in \{1..N\}, \forall t \in \{1..T\} \qquad (37)$$

$$x_{et}^{vb}(t) \geq \mathbf{0};\ \forall et \in \{1..N\}, \forall t \in \{1..T\} \qquad (38)$$

$$x_{et}^c(t) \geq \mathbf{0};\ \forall et \in \{1..N\}, \forall t \in \{1..T\} \quad (39)$$

Equation (40) guarantees that the allocation relating to discharge from energy storage is less than or equal to zero.

$$x_{et}^d(t) \leq \mathbf{0}; \forall et \in \{1..N, \forall t \in 1..T \qquad (40)$$

Equation (41) represents the inequality condition to ensure that the resultant output energies post-conversion is greater than or equal to zero.

$$Y(t) \geq \mathbf{0};\ \forall t \in \{1..N\}, \forall t \in \{1..T\} \qquad (41)$$

This multi-energy portfolio optimization problem with the objective function and the set of linear constraints Equations (21-41) is Mixed Integer Quadratic Problem (MIQP). In the multi-energy portfolio optimization problem, focus is on estimating the variables including $gv_{et}(t)$, $gc_{et}(t)$, $Y\ (t)$, $X(t)$, $emi(t)$ provided that the values of the parameters $gv\widehat{RES}_{et}^r(t)$, $P(t)$, $Q_1(t)$ are known or expected in advance.

The steps 202 through 208 are further illustrated and better understood by way of following exemplary description.

**Case Study Setup:**

EH Asset Specifications: In the present disclosure, the EH consisting of three types of assets: energy generators, energy converters, and energy storage is considered. Each asset has a distinct utility in EH:

1) Energy generators facilitate the conversion of one type of energy to another where the input type of energy comes from a natural source such as solar energy, coal, natural gas, and/or the like that humans cannot create and the output energy type is utility energy such as electricity, heat, cooling, and/or the like.
2) Energy converter helps to convert one type of energy to another type, where input and output type of energy are utility type but different, like if input type of energy is electricity, then output energy type is heat.
3) Energy storage provides a means to store energy, where the input and output energy types are similar energy types.

Additionally, a set of different variations of each asset class is also considered in EH to study the applicability of the system of the present disclosure, in terms of five value indicators. The configurations of the different variants of the energy generator, energy converter and energy storage are given respectively in the Table 1, 2 and 3 respectively. In Table 2, $E$ denotes electricity, $H$ denotes heat, $H_2$ denotes hydrogen, $W$ denotes water, $G$ denotes gas, $NG$ denotes natural gas, $M$ denotes market, $L$ denotes load, $D$ denotes demand, $BLA$ denotes bilateral agreement, $EM$ denotes energy market, $RES$ denotes renewable energy source, $S - CC$ denotes storage- convertor constraints (min-max), $CC$ denotes convertor constraints (charging efficiency), $CE$ denotes conversion efficiency, $R$ denotes ramping, and $MM$ denotes min-max, CCGT represents combined cycle gas turbine and CHP represents combined heat and power.

Table 1

| Generator Type | solarPV | CCGT-1 | CCGT-2 | Boiler | CHP-1 | CHP-2 |
|---|---|---|---|---|---|---|
| Energy Type | E | E | E | H | E, H | E, H |
| Generator Efficiency (%) | - | 0.75 | 0.85 | 0.8 | 0.55, 0.45 | 0.45, 0.35 |
| Minimum Capacity (kWh) | 0 | 500 | 0 | 60 | 100, 100 | 200, 200 |
| Maximum Capacity (kWh) | 250 | 1600 | 800 | 640 | 1000, 1000 | 2000, 2000 |
| Ramp-Down Capacity (kWh) | - | 675 | 335 | 580 | 240, 200 | 480, 400 |
| Ramp-Up Capacity (kWh) | - | 675 | 335 | 100 | 100, 50 | 200, 100 |

Table 2

| Converter Type | Heat Pump | Heat-to-Electricity |
|---|---|---|
| Input Energy Type | E | H |
| Output Energy Type | H | E |
| Conversion Efficiency/ COP % | 3 | 0.38 |
| Minimum Capacity (kWh) | 0 | 0 |
| Maximum Capacity (kWh) | 90 | 100 |

Table 3

| Storage Type | BESS | TESS |
|---|---|---|
| Minimum Capacity (kWh) | 0 | 0 |
| Maximum Capacity (kWh) | 4000 | 8000 |
| Minimum Charging Capacity (kWh) | 1000 | 2000 |
| Maximum Charging Capacity (kWh) | 1000 | 2000 |
| Charging Efficiency % | 0.9 | 0.9 |
| Discharging Efficiency % | 0.9 | 0.9 |
| Initial Energy (kWh) | 0 | 0 |
| Replacement Cost (€) | 20000 | 5000 |

(continued)

| Storage Type | BESS | TESS |
|---|---|---|
| Total Charging/ Discharging Capacity (kWh) | 1e7 | 1e7 |

The EH generator set includes a solar PV generator, a boiler, two CCGT generators, and 2 CHP generators. The generator efficiency of each generator using conventional free fuel is calculated as the ratio between the output energy volume and the input energy volume. The efficiency of the solar PV generator is not determined because it is a RES generator and does not use conventional fuel. The energy converter's set comprises of a heat pump and heat to electricity (H2E) converter, which facilitates the conversion of energy between different energy types, namely electricity and heat. Battery energy storage system (BESS) and Thermal energy storage system (TESS) form the energy storage set of the EH. They are used to store energy in the same form when the demand for that respective type of energy is less than the supply. They can exploit changes over time in the supply-demand imbalance of each type of energy. The degradation cost associated with each type of storage is based on its replacement cost and its total charge/discharge capacity.

Demand specifications: The demand set for the EH is composed of long-term bilateral agreements between EH, consumers and DAM corresponding to each energy type in the EH.

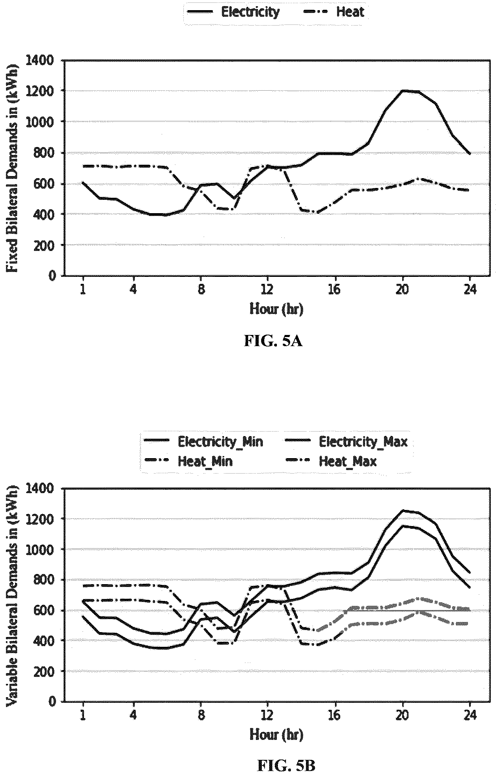

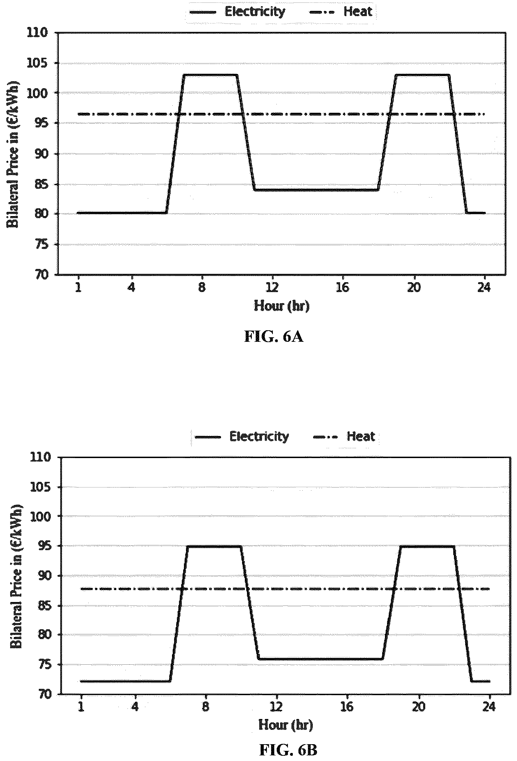

1. Bilateral Demand Data - Long-term bilateral agreements between the EH and the consumers are of two types, based on the flexibility of the agreed energy volumes. Fixed bilateral agreements are those in which the agreed volume of energy is fixed, whereas in variable bilateral agreements there is an agreed range of energy volumes that is mutually discussed and fixed. FIGS. 5A and 5B depict graphical representations illustrating hourly average of energy volumes for different energy types, in accordance with some embodiments of the present disclosure. As shown in FIG. 5A and 5B, the hourly average of energy volumes in mutually fixed bilateral agreements and the energy volume range in mutually variable bilateral agreements for all the energy types in the EH are provided. The agreed price at which EH sells energy under Bilateral Agreement is predetermined for the entire period. The agreed price for a fixed bilateral agreement and a variable bilateral agreement are different, with the latter having a lower price than the former because consumer choice is limited in the variable bilateral agreement. FIGS. 6A and 6B depict graphical representations illustrating bilateral agreement price for different energy types, in accordance with some embodiments of the present disclosure. As shown in FIGS. 6A and 6B, the agreed price for both the fixed and variable bilateral agreements are provided.

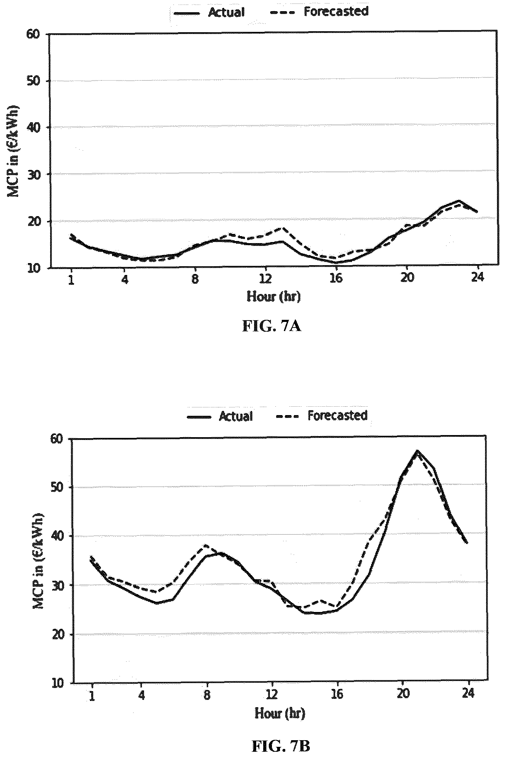

2. DAM - This is a physical trading market that exchanges energies over a 60-minute period within 24 hours of the next day, starting at midnight. DAMs of different energy types allow EH to generate more energy than existing bilateral demand and trade that energy in the respective markets to increase revenue. However, this scheme is only beneficial if the prices prevailing in DAM is higher than the generation cost of the EH. Since the price of DAM for the next day is not known, a forecast module is used to forecast the price of DAM based on historical prices. A Neural Hierarchical Interpolation for Time Series (NHITS) forecasting technique is applied to forecast the future price of each type of DAM from January 1, 2020, to June 30, 2020. DAM price data for previous two years (from January 2018 to December 31, 2019) for the European Electricity Exchange (EPEX) market area used to develop the electricity forecast module DAM. In the present disclosure, heat DAM prices are generated using a function based on natural gas DAM prices. This data is used to create a forecasting module for the thermal DAM. The accuracy of the forecast modules is tested by comparing actual and forecast DAM electricity and heat prices. FIGS. 7A and 7B depict graphical representations illustrating actual and predicted DAM prices for different types of energy in accordance with some embodiments of the present disclosure.

**Simulation Studies:**

In the present disclosure, a series of simulation studies are performed to analyze the contribution of different asset types, investigate the benefits of different trading strategies, and study the impact of modeling RES uncertainty in the EH. Table 4 provides detailed configuration of all the simulation scenarios, and the corresponding results and explanations of each scenario.

Table 4

| Assets→ Scenario↓ | | Ener gy | Genera tor Types | Conver tor Types | Stora ge Type s | Dema nd Types | Risk Aversi on Factor | RES Uncertai nty factor |
|---|---|---|---|---|---|---|---|---|
| Asset Contribu tion | G | E, H | CCGT$_1$, CCGT$_2$, CHP$_1$, CHP$_2$, Boiler, solarPV | - | - | FBA, VBA | - | 1 |
| | GC | E, H | CCGT$_1$, CCGT$_2$, CHP$_1$, CHP$_2$, Boiler, solarPV | HP, H$_2$E | - | FBA, VBA | - | 1 |
| | GS | E, H | CCGT$_1$, CCGT$_2$, CHP$_1$, CHP$_2$, Boiler, solarPV | - | BESS , TESS | FBA, VBA | - | 1 |
| | GC S | E, H | CCGT$_1$, CCGT$_2$, CHP$_1$, CHP$_2$, Boiler, solarPV | HP, H$_2$E | BESS , TESS | FBA, VBA | - | 1 |
| Trading Strategie s | NR | E, H | CCGT$_1$, CCGT$_2$, CHP$_1$, CHP$_2$, Boiler, solarPV | HP, H$_2$E | BESS , TESS | FBA, VBA, DAM | - | 1 |
| | RA | E, H | CCGT$_1$, CCGT$_2$, CHP$_1$, CHP$_2$, Boiler, solarPV | HP, H$_2$E | BESS , TESS | FBA, VBA, DAM | 1 | 1 |
| | RS | E, H | CCGT$_1$, CCGT$_2$, CHP$_1$, CHP$_2$, Boiler, solarPV | HP, H$_2$E | BESS , TESS | FBA, VBA, DAM | 0.1 | 1 |
| RES Uncertai nty | U-1 | E, H | CCGT$_1$, CCGT$_2$, CHP$_1$, CHP$_2$, Boiler, solarPV | HP, H$_2$E | BESS , TESS | FBA, VBA, DAM | 0.1 | 1 |
| | U-0.7 5 | E, H | CCGT$_1$, CCGT$_2$, CHP$_1$, CHP$_2$, Boiler, solarPV | HP, H$_2$E | BESS , TESS | FBA, VBA, DAM | 0.1 | 0.75 |
| | U-0.5 | E, H | CCGT$_1$, CCGT$_2$, CHP$_1$, CHP$_2$, Boiler, solarPV | HP, H$_2$E | BESS , TESS | FBA, VBA, DAM | 0.1 | 0.5 |
| | U-0.2 5 | E, H | CCGT$_1$, CCGT$_2$, CHP$_1$, CHP$_2$, Boiler, solarPV | HP, H$_2$E | BESS , TESS | FBA, VBA, DAM | 0.1 | 0.25 |
| | U-0 | E, H | CCGT$_1$, CCGT$_2$, CHP$_1$, CHP$_2$, Boiler, solarPV | HP, H$_2$E | BESS , TESS | FBA, VBA, DAM | 0.1 | 0 |
| Overall Analysis | Cas e Stu dy | E, H | CCGT$_1$, CCGT$_2$, CHP$_1$, CHP$_2$, Boiler, solarPV | HP, H$_2$E | BESS , TESS | FBA, VBA, DAM | 0.1 | 0.5 |

As can be seen in Table 4, each scenario is analyzed based on five value indicators, which are: profit augmentation, emission reduction, performance improvement, asset utilization, and price uncertainty reduction. Each value indicator is associated with a set of metrics to quantify the results of each simulation. Table 5 enumerates a list of value indicators and their corresponding metrics.

Table 5

| S.No. | Value Indicator | Metrics |
|---|---|---|
| 1 | Profit Augmentation | Profit per unit energy($¿$/kWh) |
| 2 | Emission Reduction | $CO_2$ Emissions per unit energy (kg/kWh) |
| 3 | Performance Improvement | Energy Wastage (kWh), Efficiency (%) |
| 4 | Asset Utilization | Asset Utilization (%) |
| 5 | Price Uncertainty Reduction | Profit Deviation (%) |

**A. Contribution of different asset types such as generators, converters and storage's:** In the present disclosure, long-term bilateral agreements are considered as the only demand option which is to be met by the EH. To meet the demands, different combinations of asset types in EH are considered and advantages owing to each asset type are observed. The list of different asset combinations along with their simulation results are provided in Table6 below.

Table 6

| Scenario → Metrics ↓ | G | GC | GS | GCS |
|---|---|---|---|---|
| Realized Profit (€) | 19517.4 | 19846.5 | 21175.6 | 21476.3 |
| Generated Energy (kWh) | 538.94 | 482.69 | 543.45 | 493.5 |
| Profit (€) per (kWh) | 0.036 | 0.041 | 0.039 | 0.043 |
| Energy Wastage (kWh) | 83.1 | 64.5 | 73.3 | 56.9 |
| Generation Utilization (%) | 34.35 | 31.17 | 34.6 | 32.17 |
| Efficiency (%) | 85 | 94 | 84 | 92 |

1. Generator (G): In this scenario, only the energy generators out of all the asset types present in the EH are considered to meet the bilateral agreement demands of different energy types. For each energy type, cumulative volume generated by EH in each time block is equal to the bilateral demand in that respective time block. Thus, the generation volume of EH is limited by the bilateral demand in that time block. As per the simulation run, the EH generates a total energy volume of 538.94 kWh comprising all the energy types for seven days, which is used to meet the bilateral agreements demand. The transaction between EH and consumers produces a realized profit of 19517.4 €. The value of metric profit per kWh is 0.036 which gives information about output selling price and input cost price. However, the EH loses an opportunity of 83.1 kWh of energy, because of supply-demand imbalance which means that the energy generators restrained by ramping constraints generate more energy than the demand which remains un-utilized. Also, due to limited demand, the utilization of energy generators in EH is only 34.35%. The efficiency of the entire EH is defined as the ratio of total energy traded as output to total energy generated by EH, which stands out to be 85% for this scenario.

2. Generator-Converter (GC): Energy converters are used in asset mix in addition to energy generators. The converters provide flexibility to EH to meet the bilateral demands, in time-blocks when either there is a supply-demand imbalance in one energy type, or if the cost of generation of one energy type is less compared to another. The simulation run shows that the realized profit increases by 1.7% compared to G. But it is noted that the generated volume by EH decreases resulting in a 13.8% increase in profit per kWh, this is because of the heat pump which has a COP of greater than one, which increases the volume of heat in the process of conversion. Generation utilization also sees a dip of 9.3% due to reduced generation volume. However, the opportunity loss by EH in the form of unutilized energy reduces by 22.4% because some volume of it is converted into other energy forms and used to meet the respective demand. Due to the combined effect of higher COP of heat pump and reduced unutilized energy the efficiency of the scenario increases by 10.5%.

3. Generator-Storage (GS): Storage in an EH asset mix facilitates temporal variations in the bilateral demands and generation costs. It allows the EH to generate excess energy and store it in time blocks when either generation prices are less or the bilateral demand is less and use the stored energy when either the generation prices are more, or bilateral demands are more. The multi-energy storage helps to increase the realized profit of EH by 8.5% compared to generator G. However, the generated volume is slightly more than the generator G because some energy is lost in the charging and discharging process. This loss is the reason behind slight reduction in efficiency of the EH. The storage helps to increase the profit per kWh of the EH by 8.3%. Additionally, the opportunity loss of EH reduces by 11.8%, as some part of it is stored and utilized when demand is more.

4. Generator-Converter-Storage (GCS): The EH makes use of all the asset types to exploit both the temporal and inter-energy type imbalances to increase its profit margin. This is validated by the simulation run of this setup, which shows an increase of 10% in the realized profit of the EH compared to G. This increase is more than the increase in GC and GS because the model exploits the benefits of both assets. The generated volume is slightly more than GC scenario because some energy is lost in the charging and discharging process of storage. The GCS setup produces the maximum profit per kWh of 0.043 which is 19.4% more than G. Furthermore, it minimizes the opportunity loss of EH by reducing the value by 31.2%. The overall efficiency and generation utilization show similar trends as discussed in the above scenarios.

As shown in Table 6, a comparative study of the four sub-scenarios shows that the asset's energy storage and energy converters combined perform better than the other competitive scenarios along all the metrics.

**B. Analysis of trading strategies:** DAM provides EH trading opportunities, to generate more energy than the existing long-term bilateral demand and trade it in the market. For each energy type, the volume of extra generated energy in each time block by the EH depends on a mix of factors including prices prevailing in the DAM, cost of generating energy, cost of converting the energy, and volume of long-term bilateral demand. However, prices in the DAM are nondeterministic, which fosters uncertainty in the results produced by the model. To regulate the uncertainty in the dynamic optimization model, the EH can control its exposure to the DAM by using the risk aversion factor $k$. It is used to regulate the level of risk the EH is willing to take, according to which the optimal trading portfolio is determined. For understanding, three trading strategies including no risk (NR), risk aversion (RA), and risk seeking (RS) are considered in the present disclosure. Table 7 provides result of simulation of each of the trading strategies.

Table 7

| Scenario →<br>Metrics ↓ | NR | RA | RS |
|---|---|---|---|
| Realized Profit (€) | 40696.1 | 32815.7 | 39410.9 |
| Generated Energy (kWh) | 1501.5 | 813.7 | 1258.8 |
| Profit(€) per (kWh) | 0.027 | 0.041 | 0.031 |
| Energy Wastage (kWh) | 0 | 34.3 | 0 |
| Generation Utilization (%) | 89.3 | 49.1 | 75.8 |
| Profit Deviation (%) | 1.9 | 1.2 | 1.6 |

1. No risk strategy: This is the most ideal scenario, where the EH assumes that there is no difference between the actual and forecasted prices of DAM. Based on this assumption the dynamic optimization model proposes a trading strategy heavily reliant on DAM which is seen in the simulation results. The dynamic optimization model proposes that EH should increase use of all its energy generators and trade extra generated energy in the DAM. Due to this, a higher generation utilization of 89.3% for the EH is observed, most of which is traded in the DAM which is apparent by a lower profit per kWh value of 0.027 compared to GCS, as the DAM prices are lower than bilateral agreement prices. However, the assumption of EH is not valid because there is a clear profit deviation of 1.9% in this strategy. To regulate this uncertainty, the EH uses the risk aversion factor to adjust the exposure to DAM.

2. Risk Aversion strategy: In this strategy, the EH is willing to take risk, which is substantiated by a value of one for risk aversion factor $k$. To reduce the risk, the dynamic optimization model proposes a strategy in which the exposure of EH to the risk-carrying component (i.e., DAM) will be lower. The portfolio contains DAM for time blocks for which the uncertainty is lower than the permitted risk by EH. In the simulation result of RA, a decrease of 19.4% is seen in the realized profit compared to NR, due to reduced exposure to DAM. However, we observe a 51% increase in the profit per (kWh) because the average prices available in the DAM are lower than the long-term bilateral prices. In this trading strategy, the EH loses an opportunity in the form of unutilized energy of 34.3 kWh, this is due to the conservative approach opted by EH. However, the main objective of undertaking this strategy is met as it reduces the profit deviation by 36.8% compared to NR.

3. Risk Seeking strategy: The EH is ready to take higher risks for higher profit returns, so he adopts a value of 0.1 for the risk aversion factor. In this context, the dynamic optimization model proposes a strategy in which it gives greater exposure to DAM. This is validated by the simulation results which show a decrease in profit per kWh of 24.4% compared to RA, as the DAM prices are lower than bilateral agreements. Due to greater exposure to DAM, the realized profit increased by 20.1% compared to RA. However, this increased profit comes with uncertainty as the profit deviation increases by 25% to 1.6.

**C: Uncertainty modelling of RES:** Considering RES in the set of energy generators helps reduce emissions and increases the profit margins of the EH. However, unlike other conventional generators, the generation from RES cannot be controlled externally. It depends on numerous factors like weather conditions, solar inclination, and/or the like. These factors make RES generation nondeterministic and induce uncertainty in the dynamic optimization model. To counter the uncertainty, robust optimization techniques on the RES generation profiles are considered in the present disclosure. The robustness of the uncertainty modeling is controlled by the help of an uncertainty factor $U$, which varies between 0 and 1. A value of 1 associated with $U$ signifies the dynamic optimization model is 100% robust thus, considering the most conservative value for RES generation. With the increase in the value of $U,$ the robustness of the dynamic optimization model reduces, as the dynamic optimization model starts considering overestimated values for RES generation. Table 8 enumerates outcome of the simulations for different values of $U.$

Table 8

| Scenario → | U-1 | U-0.75 | U-0.5 | U-0.25 | U-0 |
|---|---|---|---|---|---|
| Metrics ↓ | | | | | |
| Realized Profit (€) | 39410.9 | 39478.5 | 39546.4 | 39605.2 | 39665.1 |
| Generated Energy Conventional (kWh) | 1258.8 | 1256.4 | 1253.3 | 1249.4 | 1246.3 |
| Generated Energy RES (kWh) | 0 | 6.2 | 12.3 | 18.5 | 24.6 |
| $CO_2$ Emissions (kg) per (kWh) | 0.359 | 0.358 | 0.356 | 0.354 | 0.351 |
| Generation Utilization (%) | 75.8 | 75.7 | 75.5 | 75.3 | 75.1 |
| Efficiency (%) | 103.1 | 103.3 | 103.4 | 103.6 | 103.9 |

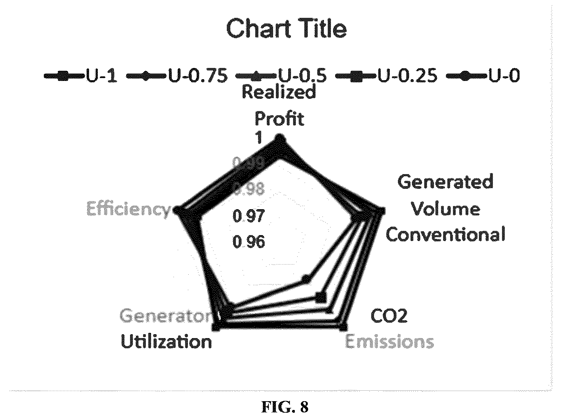

It is observed that the volume of energy generated by EH increases as the uncertainty coefficient decreases, which causes the realized profit earned by EH to increase. Indeed, in the most conservative approach, the model assumes no contribution from RES to make the results robust to any fluctuations in RES generation. However, as the value of $U$ decreases the model starts considering RES contributions in the generation mix, which increases the total generated volume of EH. Simultaneously, a decrease of 13.9% was observed in the value of $CO_2$ emissions per (kWh) due to the increasing incidence of RES. The overall efficiency of the EH sees an upsurge because there is no loss of energy in the RES generation. This is complemented by the reduced utilization of other conservative generators. FIG. 8 depicts a normalized radar plot representation illustrating relationship between different uncertainty scenarios on value indicators, in accordance with some embodiments of the present disclosure. However, this impact is not significant because the RES capacity considered in the simulation is small compared to conventional generators. The dynamic optimization model behavior remains same if the RES capacity in the EH is significant.

**D. Case study:** Asset scheduling and trading: In the present disclosure, scheduling profiles of the different assets in the EH, and trading profiles for each energy type are analyzed. Profiles on an hourly basis are examined, to understand how the asset behaves in that time slot and why it behaves in a certain way. Table 9 provides overall result of the simulation.

Table 9

| Metrics ↓ | Value |
|---|---|
| Realized Profit (€) | 39546.4 |
| Generated Energy (kWh) | 1265.7 |
| Profit (€) per (kWh) | 0.031 |
| $CO_2$ Emissions (kg) per (kWh) | 0.356 |
| Energy Wastage (kWh) | 0 |
| Generation Utilization(%) | 75.5 |
| Efficiency (%) | 103 |
| Profit Deviation (%) | 1.35 |

The simulation results are divided as:

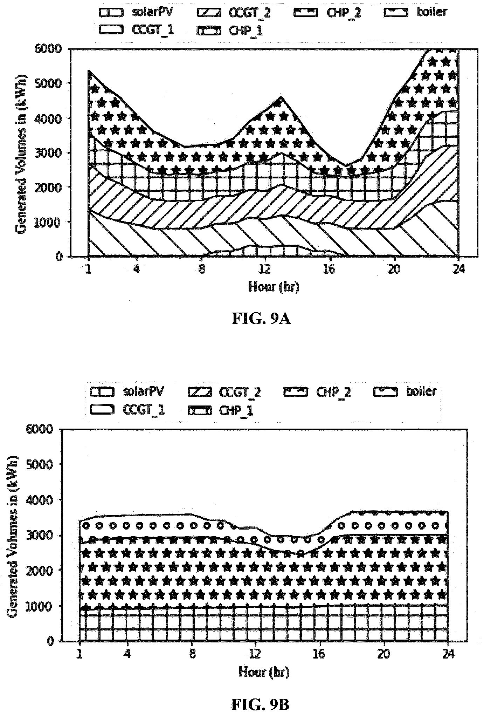

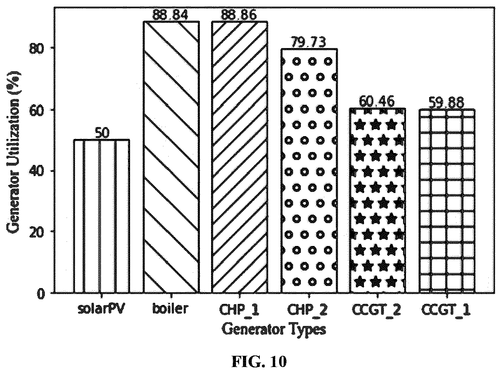

1. Generator profiles: FIGS. 9A and 9B depict graphical representation illustrating generation profiles of the different energy generators in the EH for each energy type, in accordance with some embodiments of the present disclosure. The generation profiles show that solar PV generator generates electricity during daytime between time-blocks 8-17 when there is sufficient sunlight available. The contribution of two co-generation units to total generated volume is higher compared to single energy type generators because they provide efficient performance by utilizing the heat that is generated in the generation process. FIG. 10 depicts graphical representation illustrating conversion profiles in terms of generator utilization, in accordance with some embodiments of the present disclosure. FIG. 10 shows 88.8% and 79.7% utilization respectively for combined heat and power 1 (CHP1) and combined heat and power 2 (CHP2). The boiler generator shows a higher utilization of 88.4% because it is a primary source of energy for heat demand. Thus, it is effectively utilized to exploit the heat DAM opportunities in addition to meeting the heat demand. The generation profile of combined cycle gas turbine 1 (CCGT1) and combined cycle gas turbine 2 (CCGT2) depends on the supply-demand imbalance and electricity DAM price fluctuations.

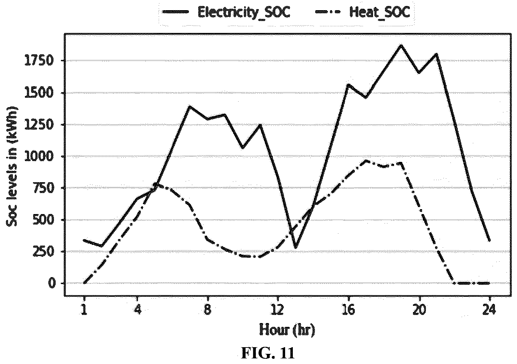

2. Storage profiles: The storage profiles exhibit a variation in state-of-charge (SoC) levels of different energy storage systems. Increasing SoC levels in the storage profile denotes the charging process whereas decreasing SoC levels shows the storage system is discharging. FIG. 11 depicts a graphical representation illustrating storage profiles, in accordance with some embodiments of the present disclosure. FIG. 11 shows falling SoC levels for both energy storage systems between time blocks 19-21. This pattern is in line with the high trading volumes in the trading profile for the same time blocks. For heat storage systems, a peak for time-blocks 16-18 is attributed to lower prices prevailing in heat DAM. Similarly, a peak in electricity SoC for time-blocks 6-8 is because of lower prices in electricity DAM.

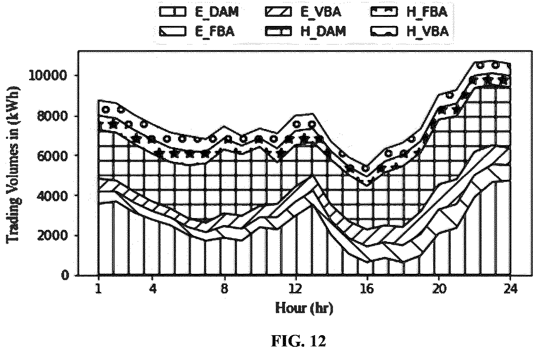

3. Trading profiles: It shows how much proportion of the energy generated by EH is traded across the various trading options spanning over different energy types. It demonstrates the trading portfolio of the EH operator, which is determined with the objective of maximizing the realized profit. FIG. 12 depicts a graphical representation illustrating trading profiles, in accordance with some embodiments of the present disclosure. The time-blocks 21-24 shown in FIG. 12 show greater trading volumes because the prices prevailing in heat and electricity DAM as well as the long-term bilateral demand is higher.

In an embodiment, the dynamic optimization model is scalable in terms of multiple energy types, multiple assets types, and multiple demand types. In other words, the dynamic optimization model is scalable in terms of the number of each asset type it can incorporate. The dynamic optimization model can augment multiple generators of a specific type. Likewise, multiple converters, storage, and demands of a particular type can be supported. The computational complexity of the model increases as the number of assets in the EH increases. The system of the present disclosure solves the problem for different entities of the EH such as storage system, conversion system, generation system and demand system. The system of the present disclosure takes into account individual behaviors of each entity and its interactions with other entities, making it a multidimensional framework for EH. The system of the present disclosure considers the interactions between different entities in the EH, between different types of energy in the EH, and the interactions between the EH and its ecosystem. This makes the system of the present disclosure holistic as it meets the needs of EH and the environment. The system of the present disclosure is not limited to a single type of energy but can be extended to consider more types of energy such as hydrogen, natural gas, etc. The mathematical complexity of the dynamic optimization model increases as the number of energy types in the EH increases. The system of the present disclosure acts as a simulation framework to assist EH operators in making short- and long-term decisions. EH operators can run simulations with different EH configurations to observe and analyze the usefulness of different asset types in terms of profitability, efficiency, and other metrics to make appropriate decisions based on their long-term goals. **In** the short term, the EH operator can run simulations with different bilateral agreements to determine whether to enter into an agreement and, if so, what the terms of the agreement are.

The written description describes the subject matter herein to enable any person skilled in the art to make and use the embodiments. The scope of the subject matter embodiments is defined herein and may include other modifications that occur to those skilled in the art. Such other modifications are intended to be within the scope of the present disclosure if they have similar elements that do not differ from the literal language of the embodiments or if they include equivalent elements with insubstantial differences from the literal language of the embodiments described herein.

**In** the present disclosure, an optimal strategy is generated for (i) energy scheduling and (ii) portfolio based trading in a simultaneous manner using the dynamic optimization model for an EH with multiple energy types, taking into account the RES uncertainty on the supply side and price uncertainty of DAM on the demand side. The dynamic optimization model provides the EH with the optimal schedule for each asset type such as energy generators, energy converters and energy storage, and provides the EH operator with an optimal trading portfolio for all types of energy in the EH. Calculating the optimal schedule for the EH assets and trading portfolio of the EH operator is closely linked to the goal of maximizing the realized profit. Furthermore, the dynamic optimization model ensures the sustainability on one hand by minimizing the $CO_2$ emissions and increased overall efficiency of EH on the other hand. Additionally, the dynamic optimization model appropriately manages the constraints associated with each energy asset in the EH and the supply-demand balance. To study the effectiveness of the dynamic optimization model, different simulation studies under four buckets, namely: 1) Impact of different asset types in EH, 2) Analysis of trading strategies, 3) RES uncertainty modeling, and 4) Case study. Based on the simulation results, conclusions points drawn include: 1) Energy assets: converters and storage increase the realized profit of the EH operator by 10%. Further, they increase the overall efficiency of the EH by 8.5%, by taking advantage of the temporal and inter-energy type variations in demands. 2) The EH operator can use different trading strategies based on the risk it is willing to take. Opting for a risk-seeking strategy helps to increase the realized profit of the EH by 83.5%, which is associated with a risk of 1.6%. This increase in revenue is attributed to the effective utilization of DAM corresponding to each energy type. The dynamic optimization model handles the DAM price uncertainty, by controlling the risk aversion factor which in turn allows the EH operator to regulate the exposure of its trading portfolio on the DAM, 3) The RO technique helps to regulate the uncertainty arising due to RES generation intermittency. Considering a balanced approach to the uncertainty associated with RES helps EH operator increase the realized profit as well as reduce the $CO_2$ emissions per kWh. The degree of change varies depending on installed capacity of the RES in the EH, and 5) Finally, complex internal connections within each energy type and linkages between energy types allow the EH operator overcome production disruptions, transportation disruptions and peak demand scenarios.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g., hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated herein by the following claims.

## Claims

1. A processor implemented method (300), comprising:

receiving (302), via one or more hardware processors, (i) a supply end input data from a plurality of energy assets in an energy hub that are handling multiple types of energy for energy scheduling considering a plurality of supply constraints, and (ii) a demand end input data from a plurality of trading units considering a plurality of trading constraints;

inputting (304), via the one or more hardware processors, the supply end input data and the trading end input data to a dynamic optimization model that captures one or more interactions between (i) the plurality of energy assets in the energy hub, (ii) multiple types of energy in the energy hub, and (iii) the energy hub and its ecosystem, wherein the dynamic optimization model is required to satisfy an objective function characterized as:

$$\max_{X(t)} \sum_{\forall t \in \{1..T\}} \Big[ \big( (pr(t)^T) \times xr(t) \big)$$

$$+ \Big( 1^{[1 \times N]} \times \big( PNR(t) \odot XNR(t) \big) \times 1^{[N \times 1]} \Big) - 1^{[1 \times N]} \times gc(t)$$

$$- \Big( 1^{[1 \times N]} \times \Big( CC(t) \bigodot Y(t) \Big) \times 1^{[N \times 1]} \Big)$$

$$- k_1 \times xr(t) \times Q_1(t) \times xr(t)^T - emi(t) \times \lambda \Big]$$

where, a first term of the objective function represents a realized revenue generated from one or more risk options, a second term of the objective function represents a realized revenue generated from one or more non-risk options, a third term of the objective function represents a total generation cost, a fourth term of the objective function represents a total conversion cost, a fifth term of the objective function represents a risk factor, and a sixth term of the objective function represents a penalty on emissions, and wherein $pr(t)$ represents a risk component of a price matrix depicting price associated with one or more trading options at time block $t$, $xr(t)$ represents a risk component of a portfolio split matrix at time block $t$, $PNR(t)$ represents a non-risk component of the price matrix depicting price associated with the one or more trading options at time block $t$, $XNR(t)$ represents a non-risk component of a portfolio split matrix at time block $t$, $gc(t)$ represents total cost to generate one or more energy types by the EH for time block $t$, $CC(t)$ represents an energy conversion cost matrix at time block $t$, $Y(t)$ represents a resultant converted energy volume matrix at time block $t$, $k_1$ represents a risk aversion coefficient, $Q_1(t)$ represents a day-ahead market (DAM) price covariance matrix at time block $t$, $emi(t)$ represents total $CO_2$ emissions produced by the EH at time block $t$, and $\lambda$ represents an emission penalization cost;

generating (306), via the one or more hardware processors, an optimal strategy for (i) energy scheduling and (ii) portfolio based trading in a simultaneous manner using the dynamic optimization model; and

dynamically updating (308), via the one or more hardware processors, the optimal strategy for (i) energy scheduling and (ii) portfolio based trading using the dynamic optimization model in accordance with a real time change in the plurality of supply constraints, and the plurality of trading constraints, such that a maximum profit is obtained while minimizing operating cost and emission.

2. The processor implemented method as claimed in claimed 1, wherein the plurality of energy assets units in the energy hub comprises a first set of energy generators, a second set of energy generators, a set of energy storages, and a set of energy converters, and wherein the plurality of trading units comprises a demand unit and an emission unit.

3. The processor implemented method as claimed in claimed 2, wherein the first set of energy generators are a set of non- renewable energy generators and the second set of energy generators are a set of renewable energy sources (RES) generators, and wherein an uncertainty factor is associated with the RES generators.

4. The processor implemented method as claimed in claimed 1, wherein the plurality of supply constraints comprise at least one of (i) one or more generator asset constraints, (ii) one or more robust optimization (RO) constraints, (iii) one or more conversion constraints, and (iv) one or more storage constraints.

5. The processor implemented method as claimed in claimed 1, wherein the trading constraints comprise at least one of (i) one or more cost related constraints, (ii) one or more demand side risk constraints, and (iii) one or more regulatory requirements based constraints; and wherein the dynamic optimization model is scalable in terms of multiple energy types, multiple assets types, and multiple demand types.

6. A system (100) comprising

a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:

receive (i) a supply end input data from a plurality of energy assets in an energy hub that are handling multiple types of energy for energy scheduling considering a plurality of supply constraints, and (ii) a demand end input data from a plurality of trading units considering a plurality of trading constraints;
input the supply end input data and the trading end input data to a dynamic optimization model that captures one or more interactions between (i) the plurality of energy assets in the energy hub, (ii) multiple types of energy in the energy hub, and (iii) the energy hub and its ecosystem, wherein the dynamic optimization model is required to satisfy an objective function characterized as:

$$\max_{X(t)} \sum_{\forall t \in \{1..T\}} \Big[ \big((pr(t)^T) \times xr(t)\big)$$
$$+ \big(1^{[1 \times N]} \times (PNR(t) \odot XNR(t)) \times 1^{[N \times 1]}\big) - 1^{[1 \times N]} \times gc(t)$$
$$- \Big(1^{[1 \times N]} \times \big(CC(t) \,\textbf{\large{•}}\, Y(t)\big) \times 1^{[N \times 1]}\Big)$$
$$- k_1 \times xr(t) \times Q_1(t) \times xr(t)^T - emi(t) \times \lambda \Big]$$

where, first term of the objective function represents realized revenue generated from one or more risk options, second term of the objective function represents realized revenue generated from one or more non-risk options, third term of the objective function represents total generation cost, fourth term of the objective function represents total conversion cost, fifth term of the objective function represents a risk factor, and sixth term of the objective function represents a penalty on emissions, and wherein $pr(t)$ represents a risk component of a price matrix depicting price associated with one or more trading options at time block $t$, $xr(t)$ represents a risk component of a portfolio split matrix at time block $t$, $PNR(t)$ represents a non-risk component of the price matrix depicting price associated with the one or more trading options at time block $t$, $XNR(t)$ represents a non-risk component of a portfolio split matrix at time block $t$, gc(t) represents total cost to generate one or more energy types by the EH for time block $t$, $CC(t)$ represents an energy conversion cost matrix at time block $t$, $Y(t)$ represents a resultant converted energy volume matrix at time block $t$, $k_1$ represents a risk aversion coefficient, $Q_1(t)$ represents a day-ahead market (DAM) price covariance matrix at time block $t$, $emi(t)$ represents total $CO_2$ emissions produced by the EH at time block $t$, and $\lambda$ represents an emission penalization cost;
generate an optimal strategy for (i) energy scheduling and (ii) portfolio based trading in a simultaneous manner using the dynamic optimization model; and
dynamically update the optimal strategy for (i) energy scheduling and (ii) portfolio based trading using the dynamic optimization model in accordance with a real time change in the plurality of supply constraints, and the plurality of trading constraints, such that a maximum profit is obtained while minimizing operating cost and emission.

7.  The system as claimed in claimed 6, wherein the plurality of energy assets units in the energy hub comprises a first set of energy generators, a second set of energy generators, a set of energy storages, and a set of energy converters, and wherein the plurality of trading units comprises a demand unit and an emission unit.

8.  The system as claimed in claimed 7, wherein the first set of energy generators are a set of non- renewable energy generators and the second set of energy generators are a set of renewable energy sources (RES) generators, and wherein an uncertainty factor is associated with the RES generators.

9.  The system as claimed in claimed 6, wherein the plurality of supply constraints comprise at least one of (i) one or more generator asset constraints, (ii) one or more robust optimization (RO) constraints, (iii) one or more conversion constraints, and (iv) one or more storage constraints.

10. The system as claimed in claimed 6, wherein the trading constraints comprise at least one of (i) one or more cost related constraints, (ii) one or more demand side risk constraints, and (iii) one or more regulatory requirements based constraints; and wherein the dynamic optimization model is scalable in terms of multiple energy types, multiple assets types, and multiple demand types.

11. One or more non-transitory machine-readable information storage mediums comprising one or more instructions which when executed by one or more hardware processors cause:

receiving (i) a supply end input data from a plurality of energy assets in an energy hub that are handling multiple types of energy for energy scheduling considering a plurality of supply constraints, and (ii) a demand end input data from a plurality of trading units considering a plurality of trading constraints;

inputting the supply end input data and the trading end input data to a dynamic optimization model that captures one or more interactions between (i) the plurality of energy assets in the energy hub, (ii) multiple types of energy in the energy hub, and (iii) the energy hub and its ecosystem, wherein the dynamic optimization model is required to satisfy an objective function characterized as:

$$\max_{X(t)} \sum_{\forall t \in \{1..T\}} \left[ \left( (pr(t)^T) \times xr(t) \right) + \left( 1^{[1 \times N]} \times \right. \right.$$
$$\left( PNR(t) \odot XNR(t) \right) \times 1^{[N \times 1]} \right) - 1^{[1 \times N]} \times gc(t) - \left( 1^{[1 \times N]} \times \right.$$
$$\left. \left( CC(t) \odot Y(t) \right) \times 1^{[N \times 1]} \right) - k_1 \times xr(t) \times Q_1(t) \times xr(t)^T - emi(t) \times \lambda \right]$$

where, first term of the objective function represents realized revenue generated from one or more risk options, second term of the objective function represents realized revenue generated from one or more non-risk options, third term of the objective function represents total generation cost, fourth term of the objective function represents total conversion cost, fifth term of the objective function represents a risk factor, and sixth term of the objective function represents a penalty on emissions, and wherein $pr(t)$ represents a risk component of a price matrix depicting price associated with one or more trading options at time block $t$, $xr(t)$ represents a risk component of a portfolio split matrix at time block $t$, $PNR(t)$ represents a non-risk component of the price matrix depicting price associated with the one or more trading options at time block $t$, $XNR(t)$ represents a non-risk component of a portfolio split matrix at time block $t$, $gc(t)$ represents total cost to generate one or more energy types by the EH for time block $t$, $CC(t)$ represents an energy conversion cost matrix at time block $t$, $Y(t)$ represents a resultant converted energy volume matrix at time block $t$, $k_1$ represents a risk aversion coefficient, $Q_1(t)$ represents a day-ahead market (DAM) price covariance matrix at time block $t$, $emi(t)$ represents total $CO_2$ emissions produced by the EH at time block $t$, and $\lambda$ represents an emission penalization cost;

generating an optimal strategy for (i) energy scheduling and (ii) portfolio based trading in a simultaneous manner using the dynamic optimization model; and

dynamically updating the optimal strategy for (i) energy scheduling and (ii) portfolio based trading using the dynamic optimization model in accordance with a real time change in the plurality of supply constraints, and the plurality of trading constraints, such that a maximum profit is obtained while minimizing operating cost and emission.

12. The one or more non-transitory machine-readable information storage mediums as claimed in claim 11, wherein the plurality of energy assets units in the energy hub comprises a first set of energy generators, a second set of energy generators, a set of energy storages, and a set of energy converters, and wherein the plurality of trading units comprises a demand unit and an emission unit.

13. The one or more non-transitory machine-readable information storage mediums as claimed in claim 12, wherein the first set of energy generators are a set of non- renewable energy generators and the second set of energy generators are a set of renewable energy sources (RES) generators, and wherein an uncertainty factor is associated with the RES generators.

14. The one or more non-transitory machine-readable information storage mediums as claimed in claim 11, wherein the plurality of supply constraints comprise at least one of (i) one or more generator asset constraints, (ii) one or more robust optimization (RO) constraints, (iii) one or more conversion constraints, and (iv) one or more storage constraints.

15. The one or more non-transitory machine-readable information storage mediums as claimed in claim 11, wherein the trading constraints comprise at least one of (i) one or more cost related constraints, (ii) one or more demand side risk constraints, and (iii) one or more regulatory requirements based constraints; and wherein the dynamic optimization model is scalable in terms of multiple energy types, multiple assets types, and multiple demand types.

System **100**

**108**

Memory **102**

Modules **102a**

Repository **102b**

I/O interface(s) **106**

Hardware processor(s) **104**

**FIG. 1**

FIG. 2

300

Receive (i) a supply end input data from a plurality of energy assets in an energy hub that are handling multiple types of energy for energy scheduling considering a plurality of supply constraints, and (ii) a demand end input data from a plurality of trading units considering a plurality of trading constraints — 302

Input the supply end input data and the trading end input data to a dynamic optimization model that captures one or more interactions between the plurality of energy assets in the energy hub, one or more interactions between multiple types of energy in the energy hub, and one or more interactions between the energy hub and its surroundings, wherein the dynamic optimization model is required to satisfy an objective function characterized as:

$$\max_{X(t)} \sum_{v \in (1..T)} \left[ \left( (pr(t)^T) \times xr(t) \right) + \left( 1^{[1 \times M]} \times \left( PNR(t) \odot XNR(t) \right) \times 1^{[N \times 1]} \right) - 1^{[1 \times M]} \times gc(t) \right.$$
$$\left. - \left( 1^{[1 \times M]} \times \left( CC(t) \odot Y(t) \right) \times 1^{[N \times 1]} \right) - k_1 \times xr(t) \times Q_1(t) \times xr(t)^T - emi(t) \times \lambda \right]$$

where, first term of the objective function represents realized revenue generated from one or more risk options, second term of the objective function represents realized revenue generated from one or more non-risk options, third term of the objective function represents total generation cost, fourth term of the objective function represents total conversion cost, fifth term of the objective function represents a risk factor, and sixth term of the objective function represents a penalty on emissions — 304

Generate, an optimal strategy for (i) energy scheduling and (ii) portfolio based trading in a simultaneous manner using the dynamic optimization model — 306

Dynamically updating, the optimal strategy for (i) energy scheduling and (ii) portfolio based trading using the dynamic optimization model in accordance with a real time change in the plurality of supply constraints, and the plurality of trading constraints, such that a maximum profit is obtained while minimizing operating cost and emission — 308

**FIG. 3**

FIG. 4

FIG. 5A

FIG. 5B

FIG. 6A

FIG. 6B

**FIG. 7A**

**FIG. 7B**

**FIG. 8**

FIG. 9A

FIG. 9B

**FIG. 10**

FIG. 11

FIG. 12

**EUROPEAN SEARCH REPORT**

Application Number

EP 25 18 1636

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/284458 A1 (SUN HONGBO [US]) 8 September 2022 (2022-09-08) <br> * abstract * <br> * paragraph [0001] - paragraph [0043] * <br> * paragraph [0064] - paragraph [0183] * <br> * claims 1-20; figures 1A-10B * <br> ----- | 1-15 | INV. <br> G06Q40/04 <br> G06Q50/06 |
| A | CN 117 810 991 A (MAANSHAN POWER SUPPLY COMPANY STATE GRID ANHUI ELECTRIC POWER COMPANY) 2 April 2024 (2024-04-02) <br> * the whole document * <br> ----- | 1-15 | |
| A | CN 113 722 911 A (UNIV CHINA GEOSCIENCES WUHAN) 30 November 2021 (2021-11-30) <br> * the whole document * <br> ----- | 1-15 | |

| | | | TECHNICAL FIELDS SEARCHED (IPC) |
|---|---|---|---|
| | | | G06Q |

The present search report has been drawn up for all claims

| Place of search | Date of completion of the search | Examiner |
|---|---|---|
| The Hague | 1 October 2025 | Bassanini, Anna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

 .......................................................................................

& : member of the same patent family, corresponding document

EPO FORM 1503 03.82 (P04C01)

## EP 4 664 384 A1

## ANNEX TO THE EUROPEAN SEARCH REPORT
## ON EUROPEAN PATENT APPLICATION NO.

EP 25 18 1636

This annex lists the patent family members relating to the patent documents cited in the above-mentioned European search report.
The members are as contained in the European Patent Office EDP file on
The European Patent Office is in no way liable for these particulars which are merely given for the purpose of information.

01-10-2025

| Patent document cited in search report | | Publication date | Patent family member(s) | | Publication date |
|---|---|---|---|---|---|
| US 2022284458 | A1 | 08-09-2022 | JP | 2022130284 A | 06-09-2022 |
| | | | US | 2022284458 A1 | 08-09-2022 |
| CN 117810991 | A | 02-04-2024 | NONE | | |
| CN 113722911 | A | 30-11-2021 | NONE | | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421046161

- IN 202321084876